(19) Europäisches Patentamt
European Patent Office
Office européen des brevets

(11) **EP 3 026 012 A1**

(12) **EUROPÄISCHE PATENTANMELDUNG**

(43) Veröffentlichungstag:
**01.06.2016 Patentblatt 2016/22**

(51) Int Cl.:
*C01B 21/068* (2006.01)     *C01B 31/36* (2006.01)

(21) Anmeldenummer: **15196628.0**

(22) Anmeldetag: **27.11.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **28.11.2014   EP 14195303**

(71) Anmelder: **Evonik Degussa GmbH**
**45128 Essen (DE)**

(72) Erfinder:
• **LANG, Jürgen Erwin**
  **76229 Karlsruhe (DE)**
• **RAULEDER, Hartwig**
  **79618 Rheinfelden (DE)**
• **UEHLENBRUCK, Goswin**
  **61440 Oberursel (DE)**

(54) **HÖCHSTREINE, AMORPHE METALLVERBINDUNGSPULVER, VERFAHREN ZU DEREN HERSTELLUNG ALS AUCH DEREN VERWENDUNG**

(57)     Die Erfindung betrifft höchstreine, nanopartikuläre, amorphe Metallverbindungspulver umfassend SiC, SiC/Si, SiGe, SiGe/C, $Si_3N_4$, die optional mit Elektronendonatoren und/oder Elektronenakzeptoren legiert oder beschichtet sein können. Ferner wird ein Verfahren zur Herstellung der Metallverbindungspulver sowie die Verwendung eines Reaktors zur Herstellung der Metallverbindungspulver offenbart. Die erfindungsgemäßen Silicium enthaltenden Metallverbindungspulver können vorzugsweise zur Herstellung von Halbleiterausgangsstoffen, Halbleitern, Thermoelementen zur Energierückgewinnung aus Abwärme, insbesondere von hochtemperaturstabilen Thermoelementen sowie zur Herstellung von Hochtemperatursperrschichten und UV/Vis-transparenten und hochtemperaturstabilen Bauteilen verwendet werden.

Fig. 1c

EP 3 026 012 A1

**Beschreibung**

Die Erfindung betrifft höchstreine, nanopartikuläre, amorphe Metallverbindungspulver umfassend SiC, SiC/Si, SiGe, SiGe/C, $Si_3N_4$, die optional mit Elektronendonatoren und/oder Elektronenakzeptoren legiert und/oder beschichtet sein können. Ferner wird ein Verfahren zur Herstellung der Metallverbindungspulver sowie die Verwendung eines Reaktors zur Herstellung der Metallverbindungspulver offenbart. Die erfindungsgemäßen Silicium enthaltenden Metallverbindungspulver können vorzugsweise zur Herstellung von Halbleiterausgangsstoffen, Halbleitern, Thermoelementen zur Energierückgewinnung aus Abwärme, insbesondere von hochtemperaturstabilen Thermoelementen sowie zur Herstellung von Hochtemperatursperrschichten und optischen Systemen, bspw. UV/Vis-transparenten und hochtemperaturstabilen Bauteilen verwendet werden.

Siliciumcarbid, hat den Trivialnamen Karborund. Siliciumcarbid ist eine zur Gruppe der Carbide gehörende chemische Verbindung aus Silicium und Kohlenstoff mit der chemischen Formel SiC.

Siliciumcarbid findet aufgrund seiner Härte und des hohen Schmelzpunktes Anwendung als Schleifmittel (Carborundum) und als Komponente für Feuerfeststoffe. Anwendung findet es auch als Isolator von Brennelementen in Hochtemperatur-Kernreaktoren oder in Hitzekacheln in der Weltraumtechnik. Ebenso dient es in Mischung mit anderen Materialien als Hartbetonzuschlagsstoff, um Industrieböden abriebfest zu machen. Ringe an hochwertigen Angelruten werden ebenfalls aus SiC gefertigt. In der Ingenieurkeramik stellt SiC aufgrund seiner vielfältigen Eigenschaften - besonders aufgrund seiner Härte - einen der am häufigsten verwendeten Werkstoffe dar.

Generell sind Verfahren zur Herstellung von reinem Siliciumcarbid bekannt. Technisch wird reines Siliciumcarbid bislang nach der modifizierten Lely Methode (J.A. Lely; Darstellung von Einkristallen von Siliciumcarbid und Beherrschung von Art und Menge der eingebauten Verunreinigungen; Berichte der Deutschen Keramischen Gesellschaft e.V.; Aug. 1955; pp. 229-231.) bspw. gemäß US 2004/0231583 A hergestellt. Hierbei werden als Rohstoffe die HP-Gase Monosilan ($SiH_4$) und Propan ($C_3H_8$) vorgeschlagen.

In der Solar- und Halbleiterindustrie sowie der LED- und Display-Herstellung besteht ein großer Bedarf an hochreinen Verbindungen, die zur Herstellung und Nutzung der Technologien benötigt werden.

Es ist bekannt, Siliciumcarbid nach dem Acheson-Verfahren aus Siliciumdioxid und Kohlenstoff nach der Reaktionsgleichung $SiO_2 + 3C \rightarrow SiC + 2\,CO$ zu erzeugen. Die dabei erreichbare Qualität ist prozessbedingt gering, und der Energieeintrag hoch.

Siliciumnitrid wird gemäß US-Patent 4,619,905 bei hohen Temperaturen durch Reduktion von Siliciumdioxid mit Kohlenstoff in Anwesenheit von Stickstoff nach der Reaktionsgleichung $3\,SiO_2 + 6\,C + 2\,N_2 \rightarrow Si_3N_4 + 6\,CO$ gewonnen, wobei die Produkt-Qualität prozessbedingt niedrig ist.

Eine andere, auf Laser basierende Methode zur Herstellung von Siliciumcarbid und Siliciumnitrid mit dem Rohstoff Hexamethyldisilazan wird beschrieben in Yong Liang; Zhengang Wu; Fen Zheng; Quanggang Xian and Zhongchao Feng "Laser synthesis of nano powders of Si-based nitrides and carbides", Proc. SPIE 3550, Laser Processing of Materials and Industrial Applications II, 35 (August 15, 1998); doi:10.1117/12.317900.

Den Prozessen gemeinsam sind hohe Rohstoffkosten, ein hoher Energieeintrag und eine für die vorgenannten technischen Anwendungsfelder nicht ausreichende Reinheit der erhaltenen Produkte, sowie die prozessual bedingte Ausbildung unerwünschter kristalliner Phasenanteile

Vielen der heutigen Industrieapplikationen von Siliciumcarbid sind in der Regel die sehr hohen Reinheitsanforderungen gemeinsam. Daher darf die Verunreinigung der umzusetzenden Silane oder Halogensilane höchstens im Bereich von wenigen mg/kg (ppm-Bereich) und für spätere Anwendungen in der Halbleiterindustrie im Bereich von wenigen µg/kg (ppb-Bereich) liegen.

Bislang wurden Verfahren entwickelt, deren Ziel die Herstellung von Einkristallen oder polykristallinen Materialien war, um die Reinheitsanforderungen über die Kristallisation einzustellen. Ein Nachteil von kristallinen Materialien ist, dass der Energieeintrag zur Rekristallisation höher ist als bei einer Bereitstellung von amorphem hoch- oder höchstreinen Silicium enthaltenden Materialien. Anschließend können die amorphen Materialien ökonomischer aufgeschmolzen werden und zur Kristallisation von kristallinem Silicium eingesetzt werden.

Aufgabe war die Bereitstellung eines Verfahrens zur einfachen und ökonomischen Gewinnung von hochreinem Silicium oder Silicium enthaltenden Produkten, die erfindungsgemäß nicht kristallin oder polykristallin vorliegen sollen. Aufgabe der Erfindung war die Herstellung von amorphen, hochreinen bis höchstreinen Silicium enthaltenden Partikeln, um den Energieeintrag bei einer möglichen späteren Kristallisation oder anderweitigen Weiterverarbeitung durch Aufschmelzen zu minimieren. Des Weiteren bestand die Aufgabe einen Prozess zu finden, der kontinuierlich oder satzweise hohe Durchsätze der herzustellenden Verbindungen erlaubt. Eine weitere Aufgabe bestand darin die Partikel darüber hinaus definiert mit Elektronenakzeptoren oder Elektronendonatoren zu versehen, die das technische Anwendungsprofil der Silicium enthaltenden Partikel deutlich erweitert. So sollen Silicium enthaltende Partikel hergestellt werden, die in Thermoelementen oder in hochtemperaturstabilen Folien, Schichten, Kabelbändern oder Bauteilen als umweltfreundliche Verbindungen zum Einsatz kommen können. So soll ein Verfahren entwickelt werden, dass auch ohne die Verwendung von Tetrachlorsilan wirtschaftlich ist.

Des Weiteren sollen die spektrale Eigenschaften der Silicium enthaltenden Partikel über die Verteilung der Elektronenakzeptoren und/oder Elektronendonatoren im jeweiligen Partikel und/oder auf dem jeweiligen Partikel einstellbar sein. Beispielsweise sollen die, wärmeleitenden Eigenschaften der Materialien beispielsweise für die Thermoelektrik verringert werden oder die wärmeleitenden Eigenschaften sollen verbessert werden, um Wärme besser aus elektronischen Geräten abzuleiten. Das erfindungsgemäße Verfahren soll zudem wirtschaftlicher sein als bekannte Verfahren, in dem die nicht umgesetzten Reaktionsprodukte oder die verwendeten inerten Gase ökonomischer wiederverwendet werden können.

Die Aufgabe konnten in überraschender Weise dadurch gelöst werden, dass die oben genannten Siliciumverbindungen durch Umsetzung von Monosilan oder höheren H-Silanen, wie der Formel $MeH_n$ oder $Me_2H_{2n-2}$, wobei Me für Silicium und n für eine ganze Zahl steht, Halogensilanen, höheren Halogensilanen oder Alkoxysilanen mit C oder N oder Ge enthaltenden Spezies in einem thermischen Prozess, ggf. kombiniert mit einem Plasmaprozess oder in einem reinen Plasmaprozess umgesetzt werden. Höhere H-Silane oder Chlorsilane werden auch als Polysilane oder Polychlorsilane bezeichnet. Die höheren H-Silane oder höheren Chlorsilane werden vor Ihrer Umsetzung in die Gasphase überführt. Das Halogen kann ausgewählt sein aus Fluor, Chlor, Brom oder Iod, bevorzugt ist Chlor.

Gelöst werden die Aufgaben durch das erfindungsgemäße Metallverbindungspulver MeX nach Anspruch 1 und das erfindungsgemäße Verfahren nach Anspruch 8 und durch Verwendung eines Freiraum-Reaktors nach Anspruch 13. Bevorzugte Ausführungsformen sind in den Unteransprüchen und in der Beschreibung erläutert.

Erfindungsgemäß wird ein großtechnisches, industrielles, vorzugsweise kontinuierliches Verfahren zur Herstellung von Metallverbindungspulvern MeX, insbesondere von Siliciumverbindungspulvern, umfassend Primärpartikel und optional Cluster der Primärpartikel bereitgestellt, wobei Me Silicium ist und X jeweils unabhängig ausgewählt ist aus Stickstoff, Kohlenstoff und Germanium, wobei X gleich oder unterschiedlich sein kann. X liegt nicht zwingend in einem stöchiometrischen Verhältnis zu Me vor, so kann MeX auch ein SiGe/C sein. Bevorzugte Metallverbindungspulver umfassen Silicium-Verbindungen wie Siliciumcarbid, Siliciumnitrid und/oder Silicium-Germanium-Verbindungen. Die Umsetzung, insbesondere umfassend die Zersetzung und Bildung der Metallverbindungen, kann bei Temperaturen ab 150 °C, bevorzugt ab 400 bis 1500 °C zur Herstellung amorpher Pulver erfolgen. Zur Herstellung amorpher Metallverbindungspulver werden kurze Kontaktzeiten, vorzugsweise bei Temperaturen unter 1450 °C, gewählt. Alternativ kann die Bildung amorpher Primärpartikel bei Temperaturen um 1300 °C bevorzugt kleiner gleich 1100 °C erfolgen. Die Abscheidung der Metallverbindungen als Metallverbindungspulver erfolgt in einer kühleren Zone des Reaktors. Bevorzugte Kontaktzeiten liegen von 10 bis 600 Millisekunden.

So benötigen übliche konventionelle Verfahren, die auf einer Umsetzung von: $SiCl_4$ basieren 10 kW/kg und mehr. Die erfindungsgemäßen Verfahren beruhen vorzugsweise auf einer Umsetzung von Monosilan mit einem Energiebedarf von weniger als 5 kW/kg besonders bevorzugt um 3 kWh/kg.

Die Aufgaben konnten auch in einer Alternative überraschend gelöst werden durch eine Behandlung im nicht-thermischen Plasma, insbesondere eines nicht-thermischen Plasma erzeugt durch eine Gasentladung, auf einen die erforderlichen Reaktionskomponenten enthaltenden Massestrom erreicht werden. Dadurch wird für die Umsetzung im (sogenannten kalten) Plasma der Energiebedarf zur Umsetzung von Monosilan mit Ammoniak beispielhaft weiter reduziert auf bis zu 2,4 kW/kg.

Gegenstand der Erfindung ist die Erzeugung von hochreinen, gegebenenfalls mit Donatoren oder Akzeptoren legierten Metallverbindungspulvern MeX, d.h. SiX sowie auch die Gewinnung von hochreinen, insbesondere höchstreinen, gegebenenfalls legierten MeX Pulvern durch Reaktion im Plasma.

Die Erfindung betrifft auch ein Verfahren zur Gewinnung von Silicium-Stickstoff-Verbindungen, Silicium-Kohlenstoff-Verbindungen und Silicium-Germanium-Verbindungen, insbesondere in hochreiner Form. Die Erfindung betrifft auch ein Verfahren zur Gewinnung von hochreinen, mit (Elektronen-) Donatoren oder (Elektronen-)Akzeptoren legierten und/oder beschichtete Silicium-Stickstoff, Silicium-Kohlenstoff- und Silicium-Germanium-Verbindungen, vorzugsweise werden hochreine Metallverbindungspulver hergestellt, erfindungsgemäß Siliciumverbindungspulver.

Gegenstand der Erfindung ist ein Metallverbindungspulver MeX, wobei Me Silicium ist und X ausgewählt ist aus Stickstoff, Kohlenstoff und Germanium, wobei das Metallverbindungspulver Primärpartikel mit einer Partikelgröße von 1 nm bis 5000 nm, vorzugsweise 1 bis 1000 nm, aufweisen, insbesondere von 1 bis 500 nm, vorzugsweise 1 bis 100 nm, besonders bevorzugt 5 bis 60 nm, 50 nm, weiter bevorzugt 5 bis 20 nm, und die Partikel im Wesentlichen amorph sind. Metallverbindungen MeX weisen jede beliebige Stöchiometrie Me zu X auf, wobei 100 : 1 bis 1 : 100 Me zu X bevorzugt ist, besonders bevorzugt sind 15 : 1 bis 1 : 15, vorzugsweise 10 : 1 bis 1 : 10.

Besonders bevorzugte Metallverbindungspulver umfassen Primärpartikel, die je nach Verfahrensführung definierte Partikelgrößen aufweisen können, wobei besonders bevorzugte Primärpartikelgrößen von 2 bis 500 nm aufweisen, insbesondere 2 bis 100 nm, bevorzugt von 2 bis 50 nm, besonders bevorzugt sind Primärpartikelfraktionen mit Partikelgrößen um 10 nm, 20 nm, 30 nm, 40 nm, alternativ um 30 bis 50 nm, 40 nm jeweils unabhängig mit einer Abweichung von plus/minus 10 nm, bevorzugt plus/minus 5 nm.

Als besonders erwünscht und bevorzugt gelten Metallverbindungspulver in denen weniger als 20 % der Partikel eine Abweichung von der mittleren Korngröße $d_{50}$ und weniger als 5 % eine Abweichung von größer gleich 50 % von

der mittleren Korngröße $d_{50}$ aufweisen.

Bevorzugt sind weiterhin Pulver umfassend MeX deren Primärpartikel einen mittleren Durchmesser $d_{50}$ (gemessen durch TEM-Auswertung; TEM = Transmissions-Elektronenmikroskop) im Bereich von 5 bis 70 nm, vorzugsweise von 30 bis 70 nm, aufweisen.

Ob die Teilchen sich sphärisch oder eher in Form von linearen Clustern ausbilden hängt unter anderem vom Puffergas bzw. von der Puffergas-Konzentration bei der Darstellung ab. Dies hat Einfluss auf das Temperaturprofil, und somit auf die Herstellbedingungen.

So können bei einer verdünnten Prozessführung überwiegend Primärpartikel isoliert werden und bei höherer Eduktkonzentration und längerer Verweilzeit (gegebenenfalls verwachsene) Cluster isoliert werden.

Gegenstand der Erfindung sind auch agglomerierte Cluster der Metallverbindungspulver.

Gleichfalls werden Metallverbindungspulver beansprucht, deren Primärpartikel Cluster ausbilden, in denen mindestens zwei Partikel an ihren Oberflächen aneinander geschmolzen sind, (synonym zu verwachsen, bspw. verschmolzen). Diese Cluster können als lineare Ketten, in Form von Drähten ggf. auch verzweigt vorliegen.

Ferner werden nach einer Alternative Metallverbindungspulver beansprucht, deren Primärpartikel mit Bor legiert sind, indem sie eine zumindest teilweise oder vollständige Bor enthaltende Beschichtung aufweisen. Alternativ können die Partikel in der Matrix legiert sein.

Es werden nach einer Alternative Metallverbindungspulver beansprucht, deren Primärpartikel mit Elektronendonatoren oder Elektronenakzeptoren, insbesondere halbmetallischen oder metallischen Elementen, dotiert und/oder legiert sind. Beispielhaft seien Bor oder Antimon als Dotierelement bzw. Legierungselement genannt. Die Primärpartikel sind legiert, indem sie eine zumindest teilweise oder vollständige bspw. Bor oder Antimon enthaltende Beschichtung aufweisen. Alternativ können die Partikel in der Matrix dotiert sein. Die Dotierung kann Konzentrationen bis unterhalb der einer Legierung erreichen.

Ebenfalls Gegenstand der Erfindung sind nach einer Ausführungsvariante Metallverbindungspulver, die a) mit mindestens einem Elektronendonator oder mindestens einem Elektronenakzeptor legiert und/oder b) zumindest mit einem Elektronendonator, Elektronenakzeptor, einer einen Elektronendonator oder Elektronenakzeptor enthaltenden Verbindung mindestens teilweise beschichtet ist, bevorzugt ist das Metallverbindungspulver mit einem Element der Gruppe 13 oder 15 des Periodensystems der Elemente (PSE) nach IUPAC legiert und/oder beschichtet, insbesondere mit B, Al, P, As und/oder Sb.

Dabei können Verbindungen oder Elemente zur Legierung verwendet werden, die bevorzugt Elemente der dritten Hauptgruppe des Periodensystems der Elemente (PSE Gruppe 13 (IUPAC aktuell) umfassen, wie Bor, Aluminium, und/oder Elemente der fünften Hauptgruppe (PSE Gruppe 15 (IUPAC aktuell), wie Stickstoff, Phosphor, Arsen, Antimon.

Entsprechend einer Alternative umfassen die Metallverbindungspulver vorzugsweise Partikel, einen sphärischen Habitus auf. Die mittlere Sphärizität, definiert als Aspektverhältnis der Durchmesser der im 90° Winkel aufeinander stehenden Durchmesser ist vorzugsweise kleiner gleich 1,6, vorzugsweise kleiner gleich 1,4 bis größer gleich 0,9, vorzugsweise von 0,95 bis 1,2. Das Aspektverhältnis nahe der Kugelform erlaubt eine ideale Homogenisierung und/oder gute Verpressbarkeit von Sinterrohlingen an den Kontaktpunkten und damit einen besseren Wärmeübergang.

Entsprechend einer weiteren bevorzugten Ausführungsform sind die Partikel der Metallpulver im Wesentlichen nicht porös und weisen daher im Wesentlichen keine innere Oberfläche auf.

Gegenstand der Erfindung sind Metallverbindungspulver amorphe Pulver, insbesondere amorphe Primärpartikel und/oder Cluster, mit einer Kristallinität von kleiner gleich 12 %.

Ferner können die Metallverbindungspulver Primärpartikel und Cluster der Primärpartikel umfassen, insbesondere weisen die Cluster eine Größe von 2 nm bis 3 $\mu$m auf, insbesondere 10 nm bis 3 $\mu$m, vorzugsweise von 70 nm bis 3 $\mu$m, weiter bevorzugt von 0,51 $\mu$m bis zu 6 $\mu$m oder von 100 bis 3 $\mu$m. Die Cluster der Primärpartikel können ebenso 30 bis 500 nm groß sein, wobei die Cluster übliche Größen von um 70 bis 500 nm, vorzugsweise um 150 nm mit plus/minus 50 nm oder alternativ von im Mittel 50 bis 100 nm aufweisen. Erfindungsgemäße MeX, SiC-Metallverbindungspulver umfassen vorzugsweise Cluster der Primärpartikel mit einer Clustergröße von im Mittel etwa 150 nm mit plus/minus 50 nm.

Besonders bevorzugte Metallverbindungspulver umfassen:

a) MeX Primärpartikel mit einer Legierung mit größer gleich $10^{21}$ Atomen/cm$^3$, insbesondere bis kleiner gleich 0,5· $10^{22}$, ausgewählt aus mindestens einem Elektronendonator und Elektronenakzeptor umfasst, oder

b) MeX Primärpartikel mit einer Siliciumlegierung mit größer gleich $10^{11}$ Atomen/cm$^3$, insbesondere bis kleiner gleich 0,6· $10^{22}$, ausgewählt aus mindestens einem Elektronendonator und Elektronenakzeptor umfasst. Bevorzugte Metallverbindungspulver (MeX) sind jene aus der Klasse der sogenannten Verbindungshalbleiter wie Silicium Carbid und Siliziumnitrid sowie Silicium, Silicium-Germanium etc.

Dabei ist es weiter bevorzugt, wenn die Metallverbindungspulver Primärpartikel und optional Cluster der Primärpartikel aufweisen,

a) die jeweils unabhängig eine MeX- oder Siliciumlegierung mit mindestens einem Elektronendonator oder mindestens einem Elektronenakzeptor mindestens teilweise aufweisen und/oder

b) jeweils unabhängig mindestens eine intrinsische Zone einer MeX- oder Siliciumlegierung umfassend einen Elektronendonator, Elektronenakzeptor, eine einen Elektronendonator oder Elektronenakzeptor enthaltenden Verbindung aufweisen, und/oder

c) jeweils unabhängig mindestens eine Zone einer MeX- oder Siliciumlegierung umfassend einen Elektronendonator, Elektronenakzeptor, eine einen Elektronendonator oder Elektronenakzeptor enthaltenden Verbindung als mindestens teilweise Beschichtung aufweisen.

Vorzugsweise liegt die mindestens eine Zone als äußere Beschichtung auf den Primärpartikeln und optional Clusternn oder Macropartikeln vor, insbesondere sind die Elektronendonatoren und - akzeptoren ausgewählt aus einem Element der PSE Gruppe 13 oder 15, bevorzugt Bor, Aluminium, Phosphor, Arsen und/oder Antimon. Gleichfalls bevorzugt sind Metallverbindungspulver umfassend Primärpartikel und optional Cluster eine MeX-Legierung oder Siliciumlegierung mit einem Element der Gruppe 13 oder 15 und/oder zumindest mit einer Zone einer MeX-Siliciumlegierung mit einem Element der PSE Gruppe 13 oder 15, insbesondere sind sie mit einer Zone der Siliciumlegierung mindestens teilweise beschichtet, vorzugsweise sind sie im Wesentlichen vollständig beschichtet.

Weiterhin sind Gegenstand der Erfindung Metallverbindungspulver umfassend

a) MeX Primärpartikel mit mindestens einer intrinsische Zone einer Siliciumborlegierung, und/oder umfassend

b) MeX Primärpartikel mit mindestens einer Zone einer Siliciumborlegierung als eine zumindest teilweise Beschichtung der Primärpartikel, insbesondere liegt die Zone als eine zumindest teilweise Beschichtung der Primärpartikel vor, wobei insbesondere das Metallverbindungspulver, insbesondere die Partikel des Metallverbindungspulvers, thermoelektrische Eigenschaften aufweisen.

Um die elektrischen Eigenschaften der Metallverbindungspulver auf die jeweilige Anforderung einstellen zu können, ist es bevorzugt, wenn die Partikel eine zumindest teilweise oder vollständige Bor enthaltende Beschichtung aufweisen. Die Schichtdicke der Beschichtung kann 0,1 nm bis 250 nm, insbesondere 1 bis 50 nm betragen, besonders bevorzugt sind 1 bis 7 und 3 bis 11 nm. Ebenso kann die Schichtdicke bis 100 nm, bis 20 nm, 11 nm, bis 5 nm betragen.

Bevorzugte Metallverbindungspulver umfassen Partikel der Metallverbindung MeX, insbesondere Silicium-Stickstoff-, Silicium-Kohlenstoff- und/oder Silicium-Germanium-Verbindungen, vorzugsweise SiC, SiGe, SiN-Verbindungen, von größer gleich 99,9999 Gew.-% MeX, bevorzugt mit einem Gehalt von größer gleich 99,99999 Gew.-%, besonders bevorzugt mit einem Gehalt von größer gleich 99,999999 Gew.-%.

Ebenso bevorzugt sind Partikel umfassend Silicium-Stickstoff-, Silicium-Kohlenstoff- und/oder Silicium-Germanium-Verbindungen, wie Siliciumnitrid, Siliciumcarbid, Siliciumcarbid in einer Siliciummatrix, Siliciumcarbid mit Kohlenstoffdomänen, wie Fasern. Die Silicium-Stickstoff-, Silicium-Germanium-, Silicium-Kohlenstoff-Verbindungen können partikulär in einer Matrix von im Wesentlichen reinem Silicium, Germanium, Bor und/oder Kohlenstoff vorliegen. Alternativ können die Silicium-Stickstoff-, Silicium-Germanium-, Silicium-Kohlenstoff-Verbindungen partikulär im Wesentlichen ohne äußere Matrix oder Beschichtung, die auch eine passivierende Oxidschicht umfassen kann, vorliegen. Nach einer Alternative liegen die Silicium-Partikel mit einer Siliciumdioxid-Zone einen Core-Shell Aufbau, wobei die Oxidschicht typischerweise um 1 nm betragen kann. Ferner umfassen die Metallverbindungspulver Partikel, die Siliciumcarbid, Siliciumnitrid, Silicium-Germanium sowie entsprechend mit Bor, Phosphor, Arsen und/oder Kohlenstoff etcetera legierte Metallverbindungspulver, insbesondere entsprechend legierte Partikel von SiC, SiC/Si, SiGe, SiGe/C, $Si_3N_4$ ggf. mit Bor oder Phosphor.

Als Metallverbindungspulver umfassend SiN-Verbindungen gelten auch $Si_3N_4$ mit variierenden Gehalten an metallischem Silicium allgemein dargestellt als $Si_3N_4$/Si, insbesondere kann deren Stickstoffgehalt variieren von kleiner gleich 65 Gew.% bis 5 Gew.-%. Die vorgenannten Metallverbindungspulver umfassend SiN-Verbindungen, vorzugsweise umfassend $Si_3N_4$/Si-Verbindungen, können vorzugsweise als Core-Shell/Kern-Hülle-Partikel vorliegen, wobei metallisches Silicium den Kern und $Si_3N_4$ die Hülle bildet. Ebenfalls Gegenstand der Erfindung sind $Si_3N_4$/Si Verbindungen deren Gehalt an metallischem Silicium von 1 Gew.-% bis 95 Gew.-%, vorzugsweise von 5 Gew.-% bis 95 Gew.-%, eingestellt werden kann. Die erfindungsgemäßen $Si_3N_4$/Si Metallverbindungspulver weisen dabei vorzugsweise einen metallischen Silizium Kern umgeben von einer $Si_3N_4$ Hülle bzw. Schale auf. Der Gehalt an metallischem Silicium kann über das erfindungsgemäße Verfahren gezielt eingestellt werden.

Ein erfindungsgemäßes Metallverbindungspulver kann als $Si_3N_4$/Si mit einem Brechungsindex von etwa 2,2 bis 2,5 im Wellenlängenbereich von 400 bis 800 nm vorliegen, bevorzugt liegt das $Si_3N_4$/Si mit einem Brechungsindex von etwa 2,3 bis 2,5 im Wellenlängenbereich von 400 bis 800 nm vor, besonders bevorzugt mit einem Brechungsindex von etwa 2,4 mit einer Schwankung von +/- 0,2.

Dabei ist es erfindungsgemäß besonders bevorzugt, wenn die MeX Metallverbindungspulver hochrein sind, insbesondere höchstrein. Als hochrein gilt ein Metallverbindungspulver, wenn MeX mit einem Gehalt größer gleich 95 Gew.-% in der Gesamtzusammensetzung vorliegt, bevorzugt mit einem Gehalt von größer gleich 99 Gew.-%. Als höchstrein gilt ein Metallverbindungspulver mit einem Gehalt von größer gleich 99,99 Gew.-% von MeX sowie umfassend Dotier/Legierelemente gegenüber der Summe an unerwünschten Elementen und/oder Metalle im Metallverbindungspulver. Somit gilt ein Metallverbindungspulver als höchstrein, wenn es 99,99 Gew.-% MeX sowie Elektronenakzeptoren und/oder Elektronendonatoren, insbesondere der PSE-Gruppe 13 und/oder 15, umfasst, wie Bor, Phosphor, Antimon, Arsen, Aluminium.

Die Verunreinigungen in den jeweiligen Edukten und Verfahrensprodukten werden mittels dem Fachmann bekannter Probenaufschlussverfahren bspw. durch Nachweis im ICP-MS (Analytik für die Bestimmung der Spurenverunreinigung) bestimmt.

In den erfindungsgemäßen MeX-Pulvern weisen die Primärpartikel und optional die Cluster in der Gesamtzusammensetzung einen Gehalt von kleiner gleich 2 % Atome/cm$^3$, vorzugsweisen kleiner gleich 2000 ppm-Gew Sauerstoff auf, vorzugweise kleiner gleich 1000 ppm-Gew , insbesondere kleiner 10 ppm-Gew., bevorzugt kleiner gleich 1 ppb-Gew bis zur Nachweisgrenze, bspw. bis 1 ppt-Gew.-%.

Der Gehalt an gelösten bzw. eingeschlossenen Verdünnungsgasen, wie Xenon, Argon, Krypton, oder auch Stickstoff beträgt in der Gesamtzusammensetzung MeX-Pulver kleiner 1 % Atome/cm$^3$.

Die Analyse erfolgt neben ICP-MS und HP-GD-MS (High Purity Glow Discharge Mass Spectroskopy) bevorzugt mittels Neutronenaktivierungsanalyse (NAA). Die Neutronenaktivierungsanalyse ist eine hochempfindliche physikalische Technik der analytischen Chemie zur qualitativen und quantitativen Spurenanalyse, bei der die zu untersuchende Probe mit Neutronen (oder anderen Teilchen) beschossen wird.

Bei der Neutronenaktivierungsanalyse wird eine Probe von nur wenigen Milligramm oder Fallweise wenige µg dem Neutronenstrom (eines Kernreaktors) ausgesetzt. Die Neutronen reagieren mit den Kernen der Probe und machen aus den stabilen Isotopen radioaktive Isotope, deren Massenzahl eins höher ist als die Massenzahl des stabilen Isotops. Bei diesem ersten Kernprozess wird ein promptes γ -Quant ausgesandt, dessen Energie man messen kann und das Auskunft über den Ausgangskern gibt. In den meisten Untersuchungen wird aber erst der Zerfall des entstandenen radioaktiven Kerns zur Analyse verwendet. Es zerfällt anschließend mit der für ihn typischen Halbwertzeit unter Aussendung eines Betateilchens und charakteristischer Gammastrahlung , die in einem Gammaspektrometer untersucht wird. Auf diese Weise sind praktisch alle vorkommenden Elemente in einer Probe quantitativ und qualitativ nachweisbar. Aus den bekannte Eigenschaften der Atomkerne lassen sich neben den Gehalt der Elemente, sogar ihrer Isotope bestimmen. Die Messungen können bspw. am Berlin Neutron Scattering Center durchgeführt werden.

Die Nachweisgrenzen für die Bestimmung von Xenon (Xe), Argon (Ar), Krypton (Kr), oder auch Stickstoff durch Neutronenaktivierung bei einer Bestrahlzeit von 1 Stunde bei einer sogenannten Flußdichte an thermischen Neutronen von 10$^{14}$ cm$^{-2}$ s$^{-1}$ liegen bei ca. 10$^{-8}$ g (Ne, Xe), ca. 10$^{-9}$ (Kr), ca. 10$^{-10}$ (Ar) und bei ca. 10$^{-5}$ g für Sauerstoff (O$_2$). Die Nachweisgrenze kann damit insbesondere für kleine Probenmengen kleiner gleich 1000 ppm-Gew., 10 ppm-Gew., 1 ppb-Gew bzw. bis zur Nachweisgrenze, betragen.

Das hochreine oder höchstreine Metallverbindungspulver MeX, insbesondere SiC, SiC/Si, SiGe, SiGe/C, Si$_3$N$_4$ enthält vorzugsweise MeX mit einem Gehalt von größer gleich 99,9999 Gew.-%. Das hochreine bis höchstreine Metallverbindungspulver MeX, insbesondere SiC, SiC/Si, SiGe, SiGe/C, Si$_3$N$_4$ enthält vorzugsweise MeX mit einem Gehalt von größer gleich 99,9999 Gew.-%.

Zur Herstellung der hoch- oder höchstreinen Metallverbindungspulver wird ein hoch- bis höchstreines Silan und/oder German bevorzugt, wobei die Definition von rein bis höchstreines bspw. von Silan eines bis zu Halbleiterqualität umfasst und damit verwendet werden kann, wie z.B. monomeres und/oder polymeres Monosilan, H-Silan und/oder Chlorsilan eingesetzt, insbesondere der allgemeinen Formel I, II und/oder III oder eine Mischung der enthaltend, wie höchstreines Tetrachlorsilan, höchstreines Trichlorsilan und/oder höchstreines Dichlorsilan, vorzugsweise mit einem Gehalt an einem Silan von 80 bis 99,9999999 Gew.-%, (ad) auf 100 Gew.-% ggf. Polysilane, und mit einer Gesamtverunreinigung von kleiner gleich 100 Gew.-ppm bis 0,001 Gew.-ppt als hochreines Silan, vorzugsweise kleiner 50 Gew.-ppm bis 0,001 Gew.-ppt als höchstreines Silan, bevorzugt kleiner gleich 40 Gew.-ppm bis 0,001 Gew.-ppt an Gesamtverunreinigung mit den nachstehend genannten Elementen. Alternativ kann statt einem einzelnen Silan auch eine Mischung von Silanen eingesetzt werden, sofern sie dem vorgenannten Anforderungsprofil an den Gehalt des Silans entspricht. Entsprechend vorstehender Ausführungen umfasst die Prozessierung auch z.B. stickstoff-wasserstoff-haltige Verbindungen (Ammoniak) und/oder z.B. kohlenwasserstoff-haltige Verbindungen (Methan) als reaktive Gase.

Entsprechend vorstehender Ausführungen können die Metallverbindungspulver Primärpartikel und optional Cluster der Primärpartikel umfassen, wobei die Metallverbindungspulver MeX vorzugsweise enthalten Siliciumcarbid, Siliciumnitrid, Silicium-Germanium. Alternativ umfassen die Metallverbindungspulver Primärpartikel und optional Cluster der Primärpartikel enthaltend Siliciumcarbid, Siliciumnitrid, Silicium-Germanium, die mit Bor und/oder Kohlenstoff legiert und/oder zumindest teilweise beschichtet sind.

In den erfindungsgemäßen Siliciumpulvern weisen die Primärpartikel und optional die Cluster in der Gesamtzusammensetzung einen Gehalt von kleiner gleich 2 % Atome/cm$^3$, an Fremdmetallen auf.

Entsprechend einer besonders bevorzugten Ausführungsform weist das Metallverbindungspulver, insbesondere die Partikel des Metallverbindungspulvers, thermoelektrische Eigenschaften auf. So können diese MeX Pulver mit thermoelektrischen Eigenschaften vorzugsweise in einem thermoelektrischen Generator gewonnen und verwendet werden.

Das reine MeX-Pulver mit einem Gehalt an MeX von größer gleich 95 Gew.-% kann ein Legierungsprofil aufweisen an Metallen, bevorzugt Bor, Phosphor, Arsen, Aluminium, Eisen, Natrium, Kalium, Nickel, Chrom, Schwefel, Barium, Zirkon, Zink, Titan, Calcium, Magnesium, Kupfer, Chrom, Cobalt, Zink, Vanadium, Mangan und/oder Blei von unter 2% bis 1 ppb, bevorzugt von 2% und 0,1 % (Atome/cm$^3$) in Bezug auf die Gesamtzusammensetzung eines beispielhaften Siliciumpulvers/-äquivalents.

Gleichfalls bevorzugt sind Gemische von Metallverbindungspulvern

a) mit hohem Gehalt an MeX-Legierungen von größer gleich 5 Gew.-% bis 100 Gew.-%, insbesondere 10 bis 50 Gew.-%, mit

b) MeX-Legierungen mit einem geringen Gehalt an Siliciumlegierung von kleiner gleich 4 Gew.-% bis 1 ppt-Gew.%, vorzugsweise kleiner gleich 2 Gew.-% bis 10 ppm-Gew.%, und optional Metallverbindungspulvern

c) die keine MeX-Legierung umfassen und optional dotiert mit den genannten Dotiermitteln dotiert sein können. Das Verhältnis der Metallverbindungspulvern a) zu b) zu c) kann für a : b : c für a 1 bis 1000 : b 1 bis 1000 zu für c 0 bis 1000 betragen.

Entsprechend einer vorzugsweisen Ausführungsform ist das Metallverbindungspulver ein Verbindungshalbleiter. Übliche Thermoelemente aus Metallen wandeln thermische Energie nur sehr ineffizient in elektrische Energie um. Mit den erfindungsgemäßen Partikeln mit thermoelektrischen Eigenschaften können auf einfache und wirtschaftliche Weise thermoelektrische Partikel in einem großtechnischen Verfahren hergestellt werden. Eine wirtschaftliche Beschichtung von Oberflächen, die mit heißen Komponenten, Oberflächen, heißen Dämpfen oder Gasen in Kontakt kommen ist mit den erfindungsgemäßen Partikeln oder daraus hergestellten Beschichtungen möglich. Somit gelingt es mit Hilfe der thermoelektrischen Partikel aus Abwärme elektrische Energie zu gewinnen. Besonders bevorzugte Anwendungsfelder bieten Carnotprozesse, die mit höheren Arbeitstemperaturen betrieben werden und mit Prozess-/Abgasen in Kontakt kommenden Vorrichtungen, insbesondere deren Oberflächen, bspw. von Gas- oder Dampfturbinen sowie Vorrichtungen wie Flugzeugturbinen oder auch Batterien, die selbst große Hitze im Betrieb entwickeln.

Ebenso Gegenstand der Erfindung ist ein Verfahren zur Herstellung von Metallverbindungspulver sowie Metallverbindungspulver erhältlich nach diesem Verfahren, indem

a) mindestens eine bei erhöhter Temperatur gasförmige Siliciumverbindung,

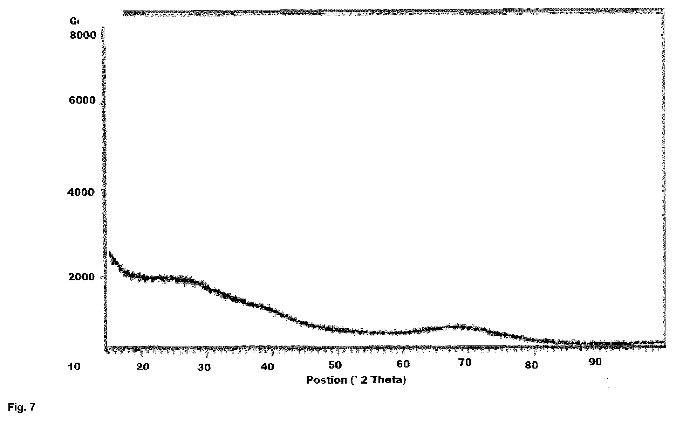

b) optional in Gegenwart eines bei erhöhter Temperatur reaktiven Gases, in Gegenwart eines Verdünnungsgases, insbesondere eines unter den Verfahrensbedingungen inerten Verdünnungsgases, in einer im durch Reaktion sauerstofffreien Atmosphäre unter (i) thermischen Bedingungen und/oder (ii) im Plasma zersetzt wird, und

in Form eines Metallverbindungspulvers MeX erhalten wird, wobei Me Silicium ist und X jeweils unabhängig ausgewählt ist aus Stickstoff, Kohlenstoff und Germanium, mit Primärpartikel deren Partikelgröße von 1 nm bis 100 nm liegt, insbesondere werden die Metallverbindungspulver MeX abgeschieden, wobei die Partikel, insbesondere die Primärpartikel, im Wesentlichen amorph sind. Figur 7 zeigt ein solches Röntgendiffraktogramm beispielhaft für $Si_3N_4$ als eine erfinderische Produktvariante.

Besonders bevorzugt werden nach dem erfindungsgemäßen Verfahren amorphe bzw. röntgenamorphe Metallverbindungspulver mit einem Kristallinität kleiner gleich 20%, bevorzugt kleiner gleich 12%, besonders bevorzugt kleiner gleich 2 %, insbesondere bis größer gleich 0,1% erhalten. Somit sind größer gleich 80 % bis kleiner gleich 99,9% der Metallverbindungspulver amorph, vorzugsweise größer gleich 88%, bevorzugt größer gleich 98%. Dies gilt insbesondere für $Si_3N_4$/Si und SiC und/oder SiC/Si Metallverbindungspulver. Der Grad der Kristallinität also der Anteil an amorphem Metallverbindungspulver kann über das erfindungsgemäße Verfahren definiert eingestellt werden.

Als im Wesentlichen amorph gilt ein Metallverbindungspulver, das röntenamorph ist. Als röntgenamorph gilt vorzugsweise ein Metallverbindungspulver mit einem Kristallinität kleiner 20%, bevorzugt kleiner 12%, besonders bevorzugt kleiner gleich 2 %, insbesondere bis größer gleich 0,1 %. Wobei der Kristallinitätsgrad nach folgender Methode mittels XRPD ermittelt werden über die Formel

$$\%Kristallinität = (100 \times A)/(A + B - C)$$

mit A = gesamte Peakfläche der Reflexe der kristallinen Bestandteilen des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diagramme des Si-Referenzstandards NIST 640 (Si-Standard = 100% Kristallinität) ermittelt. Fläche B entspricht einem eingelegten Untergrundverlauf sowie dem konstanten Untergrund C. Berechnung (HighScore Plus Software).

In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph.* Kristallin: Kristall ist ein anisotroper, homogener Körper, der eine dreidimensional periodische Anordnung der Bausteine besitzt und ein XRPD mit klar definierten auflösbaren Reflexen besitzt.

Nach einer bevorzugten Alternative wird nach dem Verfahren ein Metallverbindungspulver erhalten, dass umfasst:

a) MeX Primärpartikel mit einer Legierung mit größer gleich $10^{17}$ Atomen/cm$^3$, insbesondere $10^{18}$ Atomen/cm$^3$, besonders bevorzugt größer gleich $10^{21}$ Atomen/cm$^3$, insbesondere bis kleiner gleich $0,5 \cdot 10^{22}$, ausgewählt aus mindestens einem Elektronendonator und Elektronenakzeptor, und/oder

b) MeX Primärpartikel mit einer Siliciumlegierung mit größer gleich $10^{11}$ Atomen/cm$^3$, insbesondere bis kleiner gleich $0,6 \cdot 10^{22}$, ausgewählt aus mindestens einem Elektronendonator

und Elektronenakzeptor. Als dotiertes MeX gelten Primärpartikel, insbesondere MeX Domänen in Primärpartikeln, in denen jeweils unabhängig mindestens ein Elektronendonator oder Elektronenakzeptor zu kleiner gleich $10^{17}$ Atomen/cm$^3$, insbesondere kleiner $10^{18}$ Atomen/cm$^3$, bevorzugt kleiner gleich $10^{21}$ Atomen/cm$^3$ oder $10^{20}$ Atomen/cm$^3$ vorliegt.

Gegenstand der Erfindung ist auch ein Verfahren zur Herstellung der Metallverbindungspulver umfassend mindestens den Schritt (I) Zersetzung (A.1) der Siliciumverbindung, des reaktiven Gases oder einer Mischung dieser umfassend ein Verdünnungsgas unter (i) thermischen Bedingungen und/oder (ii) im Plasma, und Ausbildung von Primärpartikeln und/oder Clustern der Primärpartikel innerhalb von 10 bis 1000 Millisekunden, insbesondere nach einer Alternative innerhalb von 10 bis 100 Millisekunden, vorzugsweise innerhalb von 20 bis 80 Millisekunden, bevorzugt um 60 Millisekunden, vorzugsweise mit plus/minus 5 Millisekunden, und nach einer Alternative innerhalb von 50 bis 1000 Millisekunden, insbesondere innerhalb von 100 bis 500 Millisekunden erfolgt, bevorzugt kleiner gleich 100 bis 400 Millisekunden. Dabei ist es besonders bevorzugt, wenn die Temperatur von 1000 bis 1400 °C, vorzugsweise von 1100 bis 1300 °C mit einer Schwankung von plus/minus 50 °C beträgt. Die vorstehenden Angaben in Millisekunden entsprechen vorzugsweise der Verweilzeit/ Zeitspanne im Reaktionsraum. Nach einer Verfahrensalternativen kann die Verweilzeit auch die Zeit zur Bildung der Legierung und/oder Beschichtung mitumfassen und nach einer anderen Alternative entspricht die Verweilzeit der Zeitspanne ohne Ausbildung der Legierung und/oder Beschichtung der Partikel oder Cluster.

Bevorzugt erfolgt die thermische Zersetzung in den Schritten

a) eine gasförmige Siliciumverbindung und optional

b) mindestens ein reaktives Gas unter (i) thermischen Bedingungen bei einer Temperatur von 600 bis 1500 °C, insbesondere von 1000 bis 1500 °C, vorzugsweise unter 1300 °C.

Besonders bevorzugt ist eine Zersetzung bei Temperaturen um 1000 bis 1300 °C, insbesondere innerhalb von 10 bis 100 Millisekunden, bevorzugt innerhalb von 20 bis 80 Millisekunden, besonders bevorzugt innerhalb von 20 bis 60 Millisekunden, vorzugsweise um 40 Millisekunden. Die Abkühlung zur Abscheidung der Metallverbindungspulver MeX umfassend die Primärpartikel erfolgt vorzugsweise unmittelbar anschließend auf eine Temperatur unter 1000 °C, vorzugsweise unter 800 °C, bevorzugt auf unter 600 °C innerhalb eines Zeitraumes von kleiner gleich 60 Millisekunden, insbesondere kleiner gleich 40 Millisekunden, bevorzugt innerhalb kleiner gleich 20 Millisekunden.

Erfindungsgemäß wird hochreines Monosilan optional in Gegenwart einer C, N, Ge-enthaltenden Verbindung unter thermischen Bedingungen zersetzt. Vorteilhaft kann auch eine Gasphasenabscheidung von Methylsilan optional mit einer (vorgenannten) Stickstoff, Kohlenstoff und/oder Germanium enthaltenden Verbindung bei 1000 bis 1500 °C erfolgen, bevorzugt um 1000 bis 1300 °C, insbesondere mit einer Abkühlung auf unter 800 °C innerhalb von weniger als 200 Millisekunden bestimmt in einem separaten Quenchapparat.

Besonders bevorzugt ist eine Verfahrensalternative, in der mindestens eine Siliciumverbindung und optional mindestens ein reaktives Gas unter (i) thermischen Bedingungen bei einer Temperatur von 600 bis 2400 °C zersetzt wird, vorzugsweise von 1000 bis 1300 °C, besonders bevorzugt von 1100 °C bis kleiner gleich 1300 °C plus/minus 50 °C zersetzt, wobei überwiegend amorphe MeX Primärpartikel und optional Cluster der amorphen Primärpartikel isoliert werden können.

Ein bevorzugtes im Verfahren durchlaufenes Temperaturprofil umfasst Temperaturen größer gleich 600 °C bis kleiner gleich 1100 °C und anschließend kleiner gleich 700 °C. Wobei die Temperatur um 50 °C schwanken kann. Besonders bevorzugt erfolgt die Zersetzung und Abscheidung in einem Hotwall-Reaktor.

Die Bildung der Metallverbindungspulver kann erfolgen durch 1) Abkühlen der gebildeten Metallverbindung, insbesondere in Gegenwart mindestens eines inerten Verdünnungsgases und/oder 2) die Metallverbindung kann gebildet werden durch ein Inkontaktbringen der zersetzten Siliciumverbindung mit einem kühleren reaktiven Gas unter Bildung und Abkühlen der Metallverbindung, wodurch sich das Metallverbindungspulver abscheidet.

Ebenso Gegenstand der Erfindung ist ein Verfahren insbesondere umfassend die folgende Verfahrensführung, die mindestens die Alternativen umfasst:

(I) Zersetzung (A.1) der Siliciumverbindung, des reaktiven Gases oder einer Mischung dieser umfassend ein Verdünnungsgas unter (i) thermischen Bedingungen und/oder (ii) im Plasma, und Ausbildung von Primärpartikel und/oder Cluster der Primärpartikel, und optional Bildung einer Legieren und/oder Beschichteten, mit den Schritten: - Bildung einer Legierung (B) der sich bildenden Primärpartikel und/oder Cluster unter (i) thermischen Bedingungen und/oder in (ii) einer Behandlung im Plasma zur Bildung einer Legierung und/oder - Beschichtung (C.1) der gebildeten Primärpartikel und/oder Cluster, wobei die Primärpartikel und/oder Cluster optional legiert sind, unter (i) thermischen Bedingungen und/oder in (ii) einer Behandlung im Plasma zur Beschichtung.

Ferner ist Gegenstand der Erfindung ein Verfahren umfassend vorzugsweise die Schritte

(i) thermische Zersetzung zumindest teilweise an einer heißen Innenwand in einem Reaktionsraum und/oder (ii) im Plasma in einem Reaktionsraum in einem Reaktor, insbesondere in einem Freiraum Reaktor, umfassend einen Reaktionszylinder, in dem im Bereich des Reaktoranfangs in den Reaktionsraum eines Reaktionszylinders über mindestens eine Zuführung die Siliciumverbindung, optional als Gemisch umfassend das reaktive Gas und/oder das Verdünnungsgas in den Reaktionsraum eingebracht wird.

Der Reaktionsraum umfasst mindestens eine Reaktionszone, vorzugsweise umfasst der Reaktionsraum eine Vielzahl an definierten Reaktionszonen, in denen die Temperatur definiert einstellbar ist. In mindestens einer Reaktionszone erfolgt die Zersetzung der Siliciumverbindung und optional die Bildung der Metallverbindungspulver. Optional erfolgt die Bildung einer Legierung und/oder Ausbildung einer Beschichtung der gebildeten Metallverbindungspulver MeX. Am Reaktorausgang werden die gebildeten Primärpartikel und/oder Cluster erhalten und vorzugsweise aus dem Reaktor ausgeschleust.

Dabei ist es bevorzugt, dass die Primärpartikel und/oder Cluster der Primärpartikel in einer Vorrichtung zur Partikelabscheidung aufgefangen werden, insbesondere mittels einer gasdurchlässigen Membran.

Verfahrensgemäß kann die Bildung der Legierung der Primärpartikel und optional der Primärpartikel der Cluster erfolgen mit und/oder folgende Elemente umfassen:

a) Elementen der dritten Hauptgruppe des Periodensystems der Elemente (PSE-Gruppe 13), wie Bor, Aluminium, und/oder Elementen der fünften Hauptgruppe (PSE-Gruppe 15), wie Stickstoff, Phosphor, Arsen, Antimon, bevorzugt kann eine Legierung durch Zusatz von Diboran erfolgen, und/oder es kann eine Modifizierung der Primärpartikel und optional der Cluster erfolgen

b) zumindest teilweise mit mindestens einem organofunktionellen Silan ggf. mit einem Gehalt an Kohlenwasserstoffen, Bor-, Phosphor-Verbindungen und/oder Verbindungen der Elemente der dritten Hauptgruppe des Periodensystems der Elemente (PSE-Gruppe 13), wie Bor, Aluminium, und/oder Elemente der fünften Hauptgruppe (PSE-Gruppe 15), wie Stickstoff, Phosphor, Arsen, Antimon.

Die Abkühlung der Metallverbindungspulver kann auch erfolgen durch Einleiten der gasförmigen Metallverbindungen in ein flüssiges Quench-/Kühlmittel, wie flüssiges Helium oder flüssiger Stickstoff oder in ein flüssiges reaktives Gas. In diesem Fall bildet sich die Metallverbindung unmittelbar in dem reaktiven Gas, das zugleich zur Abscheidung der Metallverbindungspulver verwendet wird.

Nach einer alternativen Verfahrensvariante erfolgt die Abkühlung der Metallverbindungen in einer kühleren Region des Reaktors durch Strahlungskühlung (Emission von Infrarot-/Vis-Photonen), der vorzugsweise eine Temperatur im Bereich kleiner gleich 1400 °C aufweist. Eine Abkühlung kann auch durch ein Einleiten in inerte, kühle und/oder leicht verdampfbare Flüssigkeiten oder durch Einleiten in flüssige Siliciumverbindungen oder Bor enthaltende erfolgen. Generell können die Metallverbindungen abgekühlt werden, indem sie in eine Zone des Reaktors oder Reaktionszone geleitet werden, dessen Temperatur deutlich unterhalb 1000 °C liegt, vorzugsweise unter 900 °C, weiter bevorzugt unterhalb 800 °C, besonders bevorzugt unterhalb 600 °C. Besonders bevorzugt erfolgt ein rasches Abkühlen durch Einstellen einer Temperaturdifferenz von größer gleich 50 °C, insbesondere größer gleich 100 °C, bevorzugt von größer gleich 200 °C, besonders bevorzugt größer gleich 500 °C unterhalb des jeweiligen Schmelzpunktes der Metallverbindung MeX, innerhalb von kleiner gleich 100 Millisekunden, um im Wesentlichen amorphe Metallverbindungspulver zu erhalten.

Um im Wesentlichen amorphe Metallverbindungspulver zu erhalten erfolgt vorzugsweise eine rasche Abkühlung indem innerhalb sehr kurzer Zeit eine starke Temperaturerniedrigung erfolgt. So kann die Zone zur Zersetzung und/oder Legierung eine Temperatur von 400 bis 1500 °C aufweisen, während die Abscheidung und optional Beschichtung bei - 298 °C bis kleiner gleich 600 °C, vorzugsweise unter 200 °C erfolgt.

Alternativ können die amorphen Primärpartikel erhalten werden in einem nicht-thermische Plasma, dessen Temperaturen bei kleiner gleich 1300°C, vorzugsweise kleiner gleich 900 °C liegen.

Erfindungsgemäß bevorzugt umfasst das Plasma die Bedingungen einer Gasentladung, insbesondere im nicht-thermischen Plasma.

Erfindungsgemäß eingesetzte nicht-thermische Plasmen werden beispielsweise durch eine Gasentladung oder durch Einstrahlung von elektromagnetischer Energie, wie durch Einstrahlung von Radio- oder Mikrowellen, in einer Unterdruckkammer erzeugt. Die Erzeugung des Plasmas erfolgt also nicht wie bei thermischen Plasmen durch hohe Temperaturen, sondern durch nicht-thermische Ionisationsprozesse. Dem Fachmann sind solche Plasmen bekannt.

Für die vorstehend aufgeführten Verfahren wurden im nichtthermischen Gleichgewicht betriebene Gasentladungen verwendet. Nichtthermisch bedeutet im erfinderischen Sinne, dass die Elektronen als energievermittelnde Spezies eine höhere Temperatur und/oder eine höhere Energie als die Schwerteilchen (z.B. N, $N_2$, $N_2^+$, $N^+$ Si, SiH, $SiH_2^+$ ... C, H, $H_2$, NH, ...) aufweisen. Diese wurden durch dem Fachmann bekannte bzw. geläufige Netzteile erzeugt. Das nicht-thermische Plasma weist im Allgemeinen Elektronen mit einer Energie im Bereich von 0,1 bis 100 eV, insbesondere von 0,1 bis 20 eV, auf und Schwerteilchen deren Energie die einer Temperatur von weniger als 2400°C entspricht.

Überraschenderweise hat es sich gezeigt, dass eine solche nicht-thermische Gasentladung vorteilhaft durch Dimmen über die Pulsfrequenz erzeugen lässt, wobei vorteilhafterweise die Elektroden als Hohlelektroden mit vorzugsweise porösen Stirnflächen bspw. aus Sintermetall durch eine zweidimensionale parabolische Form ausgeführt sind. Damit verteilt sich der Gasstrom gleichmäßig über die Elektrodenoberfläche. Die zweidimensionale pilzartige Oberfläche kann gemäß F(r) = r2 (0,1 < r < 1,1 cm) beschrieben werden. Das erfindungsgemäße Verfahren wird im Allgemeinen in nicht-thermischen Plasmen durchgeführt, welche Temperaturen von minus 50°C über +500 bis 2400 °C, vorzugsweise von 50 bis 1000 °C aufweisen.

Das Plasma kann gepulst werden, vorzugsweise wird ein im Wesentlichen zylinderförmiges Plasma, insbesondere nicht-thermisches Plasma, in einem zylindrischen Bereich des Reaktionszylinders erzeugt, wobei eine Legierung und/oder Beschichtung mit Zersetzungsprodukten aus einem reaktiven Gas oder Gemisch von Gasen, der oberhalb im Reaktionszylinder gebildeten partikelförmigen Metallverbindungen erfolgt. Vorzugsweise werden die partikelförmigen Metallverbindungen im Wesentlichen homogen legiert und/oder beschichtet.

Eine weitere bevorzugte Ausführungsform des erfindungsgemäßen Verfahrens beinhaltet das Einleiten von Edelgas oder von Edelgasgemischen als Verdünnungsgas in das nicht-thermische Plasma, das insbesondere Temperaturen von kleiner gleich 2500 °C, vorzugsweise kleiner gleich 1300 °C aufweist.

Ein besonderer Vorteil des erfindungsgemäßen Verfahrens ist die effiziente Abtrennung der Partikel von gasförmigen Komponenten, wie dem Verdünnungsgas oder nicht umgesetzten reaktiven Gasen. So erfolgt vorzugsweise die Abtrennung der Partikel, indem diese durch eine gasdurchlässige Membran aufgefangen werden. So können die Partikel optional kontinuierlich oder diskontinuierlich über eine abschüssig angeordnete Membran abgetrennt werden. Das Verdünnungsgas kann mithilfe der Membran abgetrennt und erneut verwendet werden.

Vorzugsweise verfügen die Partikel über einen Schüttwinkel von 5° bis 55°.

In dem Verfahren nach der Erfindung werden vorzugsweise bei erhöhter Temperatur gasförmige Siliciumverbindungen umgesetzt, die umfassen Wasserstoff- und/oder Halogen-enthaltende Silane, wie H-Silane, Halogensilane, und/oder Kohlenwasserstoff-enthaltende Silane, wie Methylsilan, Methyltrichlorsilan, Dimethyldichlorsilan, Halogensilane, Chlorsilane sowie reine, hochreine, insbesondere höchstreine H-Silane, wie Monosilan und/oder Chlorsilane, wie Dichlorsilan, Trichlorsilan, Tetrachlorsilan, Hexachlordisilan, Methyltrichlorsilan, Polyhalogensilane, Wasserstoff enthaltende Polysilane, umfassend ausschließlich Wasserstoff oder Wasserstoff und Halogen. Zur Herstellung der amorphen Metallverbindungspulver können gleichfalls Alkoxsilane, vorzugsweise Tetramethoxysilan, Tetraethoxysilan oder gemischte Tetraalkoxysilane eingesetzt werden. Ebenso können Gemische umfassend mindestens zwei der genannten Verbindungen eingesetzt werden.

Vorzugsweise wird in dem Verfahren ein inertes Verdünnungsgas verwendet. Je nach Anforderungsprofil kann auf das Verdünnungsgas verzichtet werden, wenn zugleich ein Vakuum anliegt. Bevorzugte Verdünnungsgase sind Argon, Helium, Xenon, Krypton oder ein Gemisch umfassend mindestens zwei der genannten Gase. Die Zugabe von Edelgasen, insbesondere von Argon und Xenon im Verfahren begünstigt die Bildung sphärischer Partikel. In dem erfindungsgemäßen Verfahren werden die gasförmige Siliciumverbindung, das reaktive Gas und die Verdünnungsgase als Gesamtzusammensetzung von 100 Vol.-% in dem Verfahren eingesetzt. Dabei ist es besonders bevorzugt, wenn die Verdünnungsgase mindestens zu 0,0001 bis 99 Vol.-%, insbesondere von 0,0001 bis 60 Vol.-%, bevorzugt von 0,1 bis 1,0 Vol.-% Edelgase enthält, insbesondere Xenon und/oder Argon. Somit ist es bevorzugt von 0,0001 bis 99 Vol.-%, insbesondere von 0,0001 bis 60 Vol.-%, bevorzugt von 0,1 bis 1,0 Vol.-% Edelgase in dem Verfahren einzusetzen, insbesondere Xenon und/oder Argon.

Stickstoff ist unter den genannten Reaktionsbedingungen kein inertes Verdünnungsgas, sondern ein reaktives Gas. Das Verdünnungsgas kann vorzugsweise mit der gasförmigen Silicium-Verbindung und/oder dem reaktiven Gas vor dem Einbringen in den Reaktionszylinder gemischt werden. Alternativ wird das inerte Verdünnungsgas zur Abkühlung der Zersetzungsprodukte, wie beispielsweise zur Abscheidung der Pulver zugegeben. Die Zersetzung der Silicium-Verbindung und optional des reaktiven Gases kann auch durch Überführen der in einen Hochvakuum-Bereich erfolgen. Als ein Hoch-Vakuum wird ein Vakuum kleiner gleich 0,01 bar, insbesondere kleiner gleich 0,001 bar, kleiner gleich 0,0001 bar erachtet.

Der Druckbereich liegt üblicherweise bei 1 mbar bis 50 bar, insbesondere bei 1 mbar bis 10 bar, bevorzugt bei 1 mbar bis 5 bar. Je nach dem gewünschten Zersetzungs- und/oder Legierungs- und/oder Beschichtungsprodukt und, um die Bildung von Kohlenstoff enthaltenden Prozessgasen zu minimieren, kann das Verfahren auch in einem Druckbereich von 1 bis 50 bar erfolgen, bevorzugt bei 2 bis 50 bar, besonders bevorzugt bei 5 bis 50 bar. Dabei weiß der Fachmann, dass der zu wählende Druck ein Kompromiss zwischen Gasabführung, Agglomerierung und Reduktion der Kohlenstoff enthaltenden Prozessgase ist.

Bevorzugt einsetzbare reaktive Gase umfassen Stickstoff enthaltende Verbindungen, Germanium enthaltende Verbindungen, Wasserstoff, Stickstoff ($N_2$), $NH_3$, Hydrazin, Stickstoffwasserstoffsäure, Kohlenwasserstoffe, wie Methan, Butan, Propan, höchstreines Erdgas, aromatische Verbindungen, wie Toluol, insbesondere jeweils sauerstofffreie Verbindungen, mit der Maßgabe, dass sich bei der Zersetzung kein Wasser bildet.

Bevorzugte reaktive Gase umfassen Kohlenwasserstoffe, wie Methan, Ethan, Propan, Butan, Gemische dieser etc., HCl, Kohlenwasserstoffe mit Stickstoff. Gleichfalls besonders bevorzugte reaktive Gase umfassen Verbindungen der vorgenannten Elemente (reaktive Gase) der dritten Hauptgruppe des Periodensystems der Elemente (PSE-Gruppe 13), wie Aluminium, und/oder Elementen der fünften Hauptgruppe (PSE-Gruppe 15), wie Phosphor, Arsen, Antimon, die auch als Legierungsgase bezeichnet werden.

Kohlenstoff und Wasserstoff enthaltende Verbindung, wie aliphatische, cycloaliphatische, araliphatische oder aromatische Kohlenwasserstoffe, die gegebenenfalls Stickstoff- und/oder Schwefel als Heteroatome enthalten, oder Blausäure, Isocyansäurer, Knallsäure oder Isothiocyansäure können ebenfalls als Kohlenstoff enthaltende Verbindungen eingesetzt werden.

Als Stickstoff und Wasserstoff enthaltende Verbindungen für den Einsatz im erfindungsgemäßen Verfahren wird bevorzugt Ammoniak eingesetzt.

Das reaktive Gas kann auch in einer Plasmareaktionszone mit einer Verbindung wie Diboran oder Borhalogenid, insbesondere Diboran in einem Plasma umgesetzt werden. Je nach Verfahrensführung können die Dotierverbindungen ebenfalls zur Ausbildung einer zumindest teilweisen Beschichtung der Primärpartikel und/oder der Cluster eingesetzt werden.

Als reaktive Gase gelten auch mit Bor, Aluminium, Selen und/oder Phosphor angereicherte Gase oder Gasgemische, die in Aufreinigungsprozessen zur Herstellung höchstreiner Verbindungen als Nebenstrom bzw. Abfallprodukte erhalten werden. Diese reaktiven Gase können bei konstanten Gehalten an Bor, Aluminium, Selen, Phosphor etc., die hier als Legierungskomponente verwendet werden, zur Herstellung der Metallverbindungspulver eingesetzt werden.

Die Beschichtung kann im Gleichstromplasma durch chemische Gasphasenabscheidung erfolgen. Generell kann die Legierung in einem Verfahren im Gleichstrom oder auch im Gegenstrom (Gasstrom) oder in gekreuzten Gasströmen erfolgen. Eine definierte Legierung oder Beschichtung kann durch seitliche Zufuhr eines reaktiven Gases oder eine Zufuhr im Gegenstrom gut homogenisiert und gesteuert werden.

Generell kann die thermische Behandlung die Zersetzung umfassen sowie eine thermische Nachbehandlung, die zunächst ein starkes Abkühlen auf vorzugweise kleiner gleich 900 °C zur Ausbildung der amorphen Partikel umfasst, die anschließend in einem weiteren Verfahrens-schritt zumindest teilweise in einem Plasma oder in einer thermischen Behandlung beschichtet werden können. Zusätzlich oder alternativ kann durch eine thermische Nachbehandlung auch eine Ausbildung der Cluster erfolgen und deren Geometrie gesteuert werden.

Die Siliciumverbindungen können mittels mindestens einer Düse in die Gasphase überführt werden oder als gasförmige Siliciumverbindung optional als Gemisch umfassend das reaktive Gas und/oder das inerte Verdünnungsgas in den Reaktionsraum eingebracht werden.

Zur Durchführung des Verfahrens ist es zusätzlich zu den vorgenannten Merkmalen weiter bevorzugt, wenn die Gasentladung ein nicht-thermisches Plasma ist, weiter bevorzugt erfolgt die Gasentladung in einem Plasmajet. Für die Definition des nichtthermischen Plasmas und der Plasmajets wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3 446-13627-4".

Besonders bevorzugt beträgt der spezifische Energieeintrag von 0,1 und 1000 Ws/cm². Dabei ist es weiter bevorzugt, wenn der spezifische Energieeintrag mittels phasengenauer Momentanleistungsmessung mit einer Bandbreite von mindestens 250 kHz durchgeführt wird, wobei die Bestimmung der Momentanleistungsmessung in einem koaxialen Reaktor mit 10 cm² Entladungsfläche erfolgt. Ein koaxialer Reaktor ist vorzugsweise ein Rohrreaktor, insbesondere rotationssymmetrischer Rohrreaktor.

Der Energieeintrag zur Ausbildung des Plasmas im nicht-thermischen Gleichgewicht erfolgt vorzugsweise in der Art, dass sich in dem sich ausbildenden Plasma möglichst homogene Bedingungen für die Umsetzung der Silane mit C, N und/oder Ge enthaltenen Verbindungen ausbilden, dabei ist es besonders bevorzugt, wenn das nicht-thermische Plasma bei einer Spannung betrieben wird, bei der die Entladung die gesamte Elektrodenfläche mehr oder weniger homogen bedeckt (transiente Glimmentladung).

Entsprechend einer bevorzugten Alternative werden die abgeschiedenen Partikel an ggf. oberflächlich vorhandenen Wasserstoff (bspw. im Fall der Verwendung von Monosilan als Edukt oder Chlor-Atomen (im Fall der zusätzlichen Verwendung von Chlorsilanen als Edukt) organofunktionalisiert. Vorzugsweise werden die Partikel an der Oberfläche der Partikel durch Reaktion mit einer reaktiven organofunktionellen Gruppe des Silans modifiziert. Die Modifizierung kann über Komplexierung oder eine Ausbildung kovalenter Bindungen erfolgen. Generell können die Partikel der Metallverbindungspulver zumindest teilweise mit einem organofunktionellen Silan modifiziert werden.

Organofunktionelle Silane umfassen Silane mit ungesättigten Kohlenwasserstoffresten, Halogenfunktionalisierte Silane, wie vorzugsweise Halogenalkylsilane, wie Monochlortrimethylsilan, Halogenalkoxysilane, wie Monochlortrialkoxysilan, Alkylenalkoxysilane, Alkylenhalogensilane, Amino-funktionelle Silane, wie Aminopropyltriethoxysilan, Aminopropyltrialkylsilan, sowie organofunktionelle Silane. Organofunktionelle Silane umfassen auch organisch funktionalisierte Siliciumverbindungen und Organosiloxanen.

Gegenstand der Erfindung sind auch Formulierungen enthaltend die Metallverbindungspulver umfassend optional Hilfsmittel und Lösungsmittel und/oder Dispersionsmittel und/oder Suspensionsmittel.

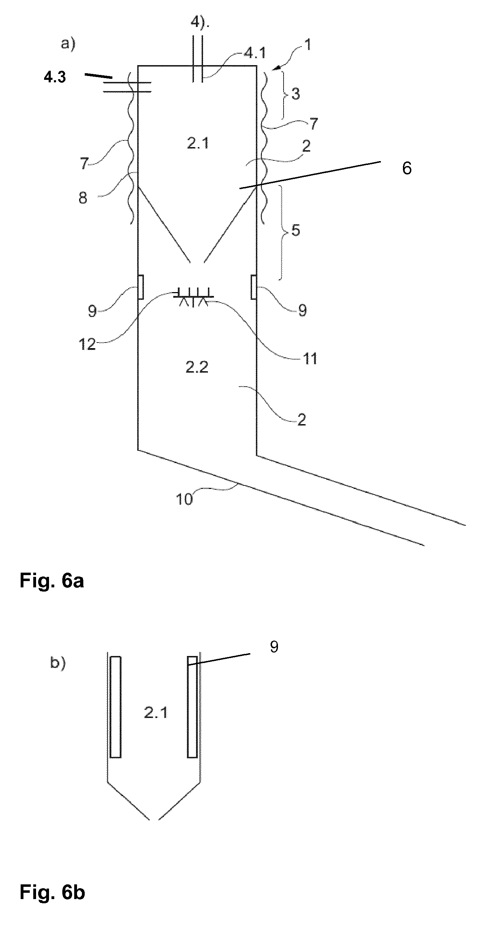

Gegenstand der Erfindung ist auch ein Reaktor (Freiraum Reaktor) (Fig. 6a) 1 zur Herstellung von Metallverbindungspulvern MeX, wobei Me Silicium ist und X jeweils unabhängig ausgewählt ist aus Stickstoff, Kohlenstoff und Germanium mit Partikeln deren mittlere Primärpartikelgröße von 1 nm bis 100 nm beträgt, insbesondere von 70 bis 500 nm, bevorzugt von 70 bis 100 nm, wobei der Reaktor 1 einen Reaktionszylinder 2 mit Reaktionsraum 2.1 umfasst und im Bereich des Reaktoranfangs 2a, insbesondere in der Zone 3 oberhalb im Reaktionsraum mindestens zwei Zuführungen 4.1, 4.2 oder 4.3 aufweist für die Einleitung

a) der mindestens einen bei erhöhter Temperatur gasförmigen Siliciumverbindung, und
b) optional des mindestens eines reaktiven Gases und/oder Verdünnungsgases, in den Reaktionsraum 2.1, wobei dem Reaktionsraum 2.1 zumindest in einem Bereich am äußeren Umfang des Reaktionsraumes 2.1 Heizvorrichtungen 7 zugeordnet sind, und/oder dem Reaktionsraum 2.1 mindestens ein Plasmagenerator 9 zugeordnet ist, der zur Erzeugung eines Plasmas im Reaktionsraumes 2.1 dient. Dem Reaktor 1 sind mindestens zwei Zuführungen 4, 4.1, 4.2 und/oder 4.3 im Bereich des Reaktoranfangs **2a** oder zugeordnet, wobei die Zuführungen in einem Winkel von größer gleich 30°, vorzugsweise 30° bis 90°, zueinander angeordnet sind. Im Reaktionsraum 2.1 ist mindestens eine Reaktionszone 2.1a, alternativ sind mehrere Reaktionszonen 2.1a bis 2.1 n angeordnet. Vorteil der verschiedenen Reaktionszonen ist die Möglichkeit einer definierten Temperaturführung über die Reaktorläge.

Vorzugsweise weist die Zuführung 4 einen Winkel von 0 bis 45° zur Mittelachse des Reaktionszylinders 2 auf, vorzugsweise 0 bis 10° und die zweite Zuführung 4.3 weist vorzugsweise einen Winkel von größer 45 bis 135° zur Mittelachse des Reaktionszylinders 2 auf, insbesondere um 80 bis 100°, bevorzugt um 90°.

Optional kann der Reaktor zwischen dem Reaktoreingang und Reaktorausgang über weitere Zuführungen verfügen, die für die Bildung der Legierung und/oder Beschichtung der Metallverbindungspulver verwendet werden können. So kann beispielsweise über eine Zuführung im mittleren Bereich des Reaktorzylinders eine Beschichtung der Partikel erfolgen, indem beispielsweise eine Bor enthaltenden Verbindung in den Reaktionszylinder, insbesondere in eine Reaktionszone des Reaktionsraumes zugeführt wird.

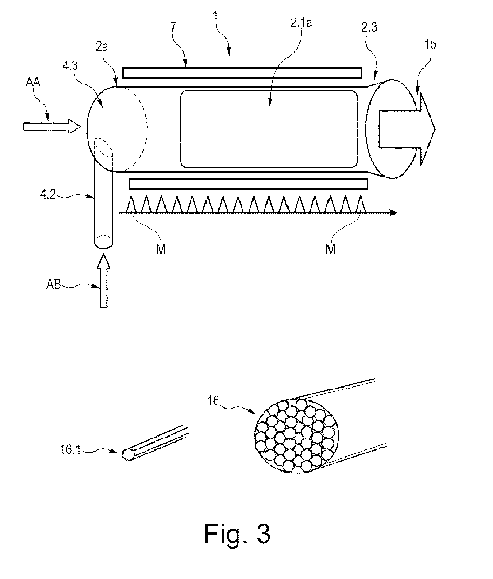

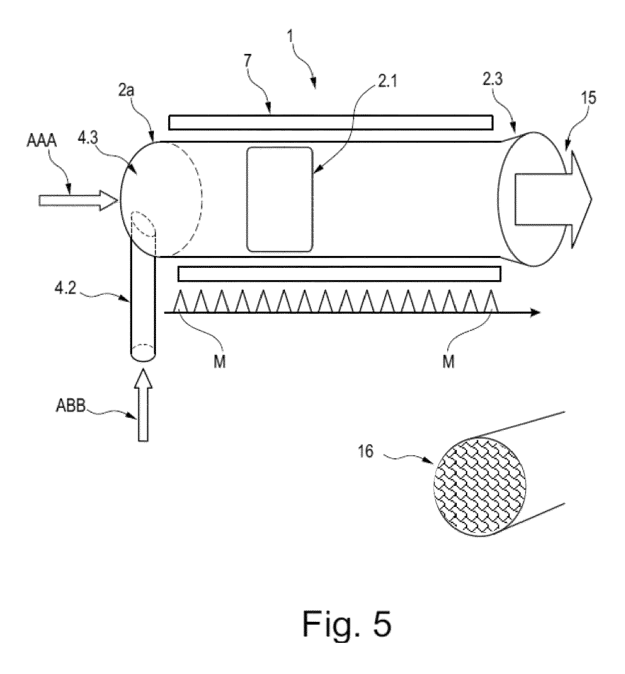

Der Reaktionsraum und/oder die mindestens eine Reaktionszone kann zudem gemäß den **Figuren 3** und **5** einen Reaktoreinsatz mit Milli-Reaktionskanälen aufweisen. Der Reaktoreinsatz mit Millireaktionskanälen kann aus Siliciumcarbid gefertigt sein oder aus jedem anderen geeigneten Material. Bevorzugt sind SiC, Siliciumnitrid und/oder Graphit. Der Reaktoreinsatz dient dazu eine sehr schnelle Zersetzung und sehr schnelle Abscheidung über die Einstellung von Temperaturdifferenzen über sehr kurze Wegstrecken im Reaktionsraum und damit in den einzelnen Reaktionszonen zu gewährleisten.

Nach einer alternativen bevorzugten Ausführungsform weist der Reaktionsraum **2,** insbesondere in mindestens einer Reaktionszone **2.1a,** einen Reaktoreinsatz **16** mit Kanälen auf, wobei der Reaktoreinsatz vorzugsweise innere Kanälen umfasst, deren Durchmesser 1 bis 20 mm betragen können, vorzugsweise 1 bis 10 mm, vorteilhaft sind die Kanäle rohrförmig, wobei ein rohrförmiger Kanal im Querschnitt jede beliebige Geometrie umfassend kreisförmig, wabenförmig etc. aufweisen kann.

Vorteilhaft verfügt der Reaktionsraum **2.1** über mindestens eine Reaktionszone **2.1a** bis **2.1n,** insbesondere über 2 bis 100 Reaktionszonen. In jeder Reaktionszone können definierte thermische Bedingungen oder Plasmabedingungen eingestellt werden.

Der Reaktor verfügt vorzugsweise im Bereich des Reaktorausgangs **2.2, 2.3** über eine Vorrichtung für die Auftrennung von Reaktionsprodukten, insbesondere für die Abtrennung der festen partikelförmigen Metallverbindungen, vorzugsweise eine Vorrichtung zur Partikelabscheidung **15**. Besonders bevorzugt ist eine Vorrichtung umfassend eine gasdurchlässige Membran **10** alternativ mit einem Filterschlauch.

Der Reaktionsraum ist evakuierbar, so dass ein definiertes Vakuum einstellbar ist.

Das Plasma in der Entladungszone kann durch Hochspannungspulse in einfacher Weise als Plasma im nicht-thermischen Gleichgewicht erzeugt werden. Die Temperaturen der Schwerteilchen (Atome, Ionen) sowie der Leichtteilchen (Elektronen) richtet sich nach reaktionstechnischen Erfordernissen. So sind bei der Siliciumnitrid Herstellung für hohe Ausbeuten Temperaturen über 1750°C , bevorzugt sind Temperaturen von über 1450°C zu vermeiden. Ist die Zielrichtung der Wunsch nach eher kleineren Partikeln, dann kann es günstig sein, vorsichtig in dieses Temperaturregime zu fahren. Dadurch wird die Nukleation kinetisch gehemmt und so werden in überraschender Weise bevorzugt kleine Teilchen im Reaktionsraum gebildet.

Für die Abscheidung der Metallverbindungspulver wurde in einer alternativen Ausführungsform mindestens ein Funktionsmolekül optional ein inertes Verdünnungsgas zur Quenchen im Bereich des Reaktorausgangs des Reaktionszylinders eingesprüht. Über die Temperaturdifferenz und das zugeführte Gasvolumen an Funktionsmolekül kann die Partikelgrösse und die Abscheidungsrate eingestellt werden. Durch Zugabe reaktiver Gase oder organofunktioneller Silane kann hier auch eine Beschichtung, Legierung und/oder Funktionalisierung der Metallverbindungspulver erfolgen.

Nach der Herstellung über das erfindungsgemäße Verfahren kann das Metallverbindungspulver durch passive Oxidation mit Luft in Reinform einfach gewonnen werden. Alternativ kann das Siliciumcarbid durch Sublimation bei hohen Temperaturen und gegebenenfalls im Hochvakuum, weiter aufgereinigt und/oder abgeschieden werden. Siliciumcarbid kann bei Temperaturen um 2800 °C sublimiert werden.

Ebenfalls Gegenstand der Erfindung sind Formulierungen enthaltend eine Metallverbindung oder eine Metallverbindung erhältlich nach dem erfindungsgemäßen und mindestens einen Hilfsstoff und/oder ein Bindemittel und optional ein Lösemittel. Bevorzugte Formulierungen können vorliegen in Form einer Suspension, Dispersion oder eine Einbettung, einer Matrix, einer kosmetischen Formulierung, pharmazeutischen Formulierung, einer Bremspaste, Schleifpaste, Druckpaste, Tinte, in druckbaren Polymeren, elektrisch leitenden Paste, Haftklebemasse, eingebettet in eine Folie oder beispielsweise auch als Gründling vorliegen.

Das Metallverbindungspulver kann auch in gepresster, extrudierter, granulierter, gesinterter, kristallisierter Form vorliegen und entsprechend abgepackt werden.

Bevorzugte Formulierung können in Form von Presslingen oder als kosmetische Formulierung vorliegen. Eine kosmetische Formulierung kann eine Creme, ein Fluid sein, dass optional SiC oder das Metallverbindungspulver als Sonnenschutz-Komponente umfasst.

Formulierung enthaltend eine Metallverbindung umfassend Silicium mit einem Lösungsmittel und/oder Dispersionsmittel und/oder Suspensionsmittel.

Die erfindungsgemäßen amorphen Metallverbindungspulver umfassend SiC eignen sich besonders bevorzugt als Deckschicht für Fotoleiter oder als Fensterschicht für Solarzellen.

Übliches Siliziumnitrid zeigt einen Brechungsindex im sichtbaren Wellenlängenbereich (400-800 nm) zwischen 2,07 und 1,9, also einen Durchschnittswert von ca. 2. Bereits dieser Wert liegt deutlich über dem von Plexiglas (Acrylat, PMMA) der typischerweise bei etwa 1,49 liegt. Damit kann bereits eine Antireflexionsschicht hergestellt werden. Eine höhere Brechzahl ist gegenüber dem Stand der Technik wünschenswert, da damit mit geringeren Füllgraden (= Materialmengen an Füllstoff im Komposit) entsprechende Brechzahlwerte erreicht werden können.

Die erfindungsgemäßen Metallverbindungspulver umfassend SiN-Verbindungen, wie vorzugsweise $Si_3N_4/Si$, können aufgrund ihres hohen Brechungsindex von 2,2 bis 2,5 als Antireflexionsschichten oder zur Herstellung von Antireflexionsschichten eingesetzt werden. Durch die erfindungsgemäß hohen Brechzahlen kann der Gehalt an $Si_3N_4/Si$ als Füllstoff bspw. in Plexiglas gegenüber bekannten Zusammensetzungen vermindert werden, um die gleiche Brechzahlen einzustellen.

Als Metallverbindungspulver umfassend SiN-Verbindungen gelten auch $Si_3N_4$i mit variierenden Gehalten von Silicium allgemein dargestellt als $Si_3N_4/Si$, insbesondere kann deren Stickstoffgehalt variieren von kleiner gleich 65 Gew.% bis 5 Gew.-%. Die vorgenannten Metallverbindungspulver umfassend SiN-Verbindungen, insbesondere umfassend $Si_3N_4/Si$-Verbindungen, können vorzugsweise als Core-Shell/Kern-Hülle-Partikel vorliegen, wobei metallisches Silicium den Kern und $Si_3N_4$ die Hülle bildet. Ebenfalls Gegenstand der Erfindung sind $Si_3N_4/Si$ Verbindungen deren Gehalt an metallischem Silicium von 1 Gew.-% bis 95 Gew.-% eingestellt werden kann, insbesondere von größer gleich 2 Gew.-%, größer gleich 4 Gew-% bis 95 Gew.-%. Die erfindungsgemäßen $Si_3N_4/Si$ Metallverbindungspulver weisen dabei vorzugsweise einen metallischen Silizium Kern umgeben von einer $Si_3N_4$ Hülle bzw. Schale auf.

Ein erfindungsgemäßes Metallverbindungspulver kann als $Si_3N_4/Si$ mit einem Brechungsindex von etwa 2,1 bis 25, insbesondere von 2,2 bis 2,5 im Wellenlängenbereich von 400 bis 800 nm vorliegen, bevorzugt liegt das $Si_3N_4/Si$ mit einem Brechungsindex von etwa 2,3 bis 2,5 im Wellenlängenbereich von 400 bis 800 nm vor, besonders bevorzugt mit einem Brechungsindex von etwa 2,4 mit einer Schwankung von +/- 0,2.

Mit dem erfindungsgemäßen SiN-Verbindungen können Komposite umfassend organische Polymere sowie Metallverbindungspulver von SiN-Verbindungen als Füllstoffe, wie die amorphen $Si_3N_4$/Si mit Primärpartikeln bspw. im Bereich 35 nm, hergestellt werden. Die amorphen $Si_3N_4$/Si Partikel können zur Einstellung der Brechzahl den bekannten Polymeren wie PMMA, Polycarbonat etc. zugesetzt werden.

Das amorphe Siliziumangereichertes $Si_3N_4$ - kurz $Si_3N_4$/Si genannt zeigte nun überraschend einen Brechungsindex im sichtbaren Wellenlängenbereich (400-800 nm) von rund 2,4. Es wird vermutet, dass es sich um sogenannte Core-Shell-Partikel handelt, bei denen der Kern aus einer Siliziumphase besteht, die Hülle bzw. Schale aus $Si_3N_4$.

Die erfindungsgemäßen Metallverbindungspulver eignen sich aufgrund ihrer Inertheit und ihres Transmissionsverhaltens besonders gut als UV-Schutzmittel, da die erfindungsgemäßen Pulver, insbesondere die SiC-Pulver, transparent vorliegen können und vorteilhaft bei 300 nm keine nennenswerte Transmission aufweisen.

Gegenstand der Erfindung ist auch die Verwendung der Metallverbindungspulver sowie die nach dem Verfahren erhältlichen Metallverbindungspulver zur Herstellung von Thermoelementen, Halbleitern, Halbleitermaterialien, Pasten, Cremes, Kosmetikprodukten (Sonnenschutzcremes, allergiearmen Kosmetikprodukten), pharmazeutischen Produkten, Silicium enthaltenden Pasten (Solarindustrie, Beschichtung), Elektroden, Membranen, Katalysatoren, von LEDs, Displays, transparenter Schichten, Flat Panel Displays, Schmelztiegeln, Tiegeln zur Kristallisation hochreiner metallischer Verbindungen, Beschichtungen, Aerosolen, Materialien für die Thermoelektrik, zur Herstellung hochreiner polykristalliner Metallverbindungen oder von Einkristallen der Metallverbindungen, in Hochtemperatur Transistoren, die von 100 bis 400 °C, vorzugsweise um 300 °C betrieben werden können, zur Herstellung von Hochtemperatursperrschichten, die bei 300 bis 400 °C betrieben werden können, Zur Herstellung von Hochtemperaturmembranen, die bei 300 bis 400 °C betrieben werden können, zur Herstellung von Hochtemperaturbauteilen in Batterien, die bei 300 bis 400 °C betrieben werden können, zur Herstellung von Bauteilen, deren Absorption von 300 bis 1000nm sich im Wesentlichen linear ändert, insbesondere von Bauteilen, deren Transmission bei etwa 1000 nm 50% beträgt und bis 450 nm oder bis etwa 300 nm 20 % beträgt und ab 300 nm im Wesentlichen keine Transmission mehr erlaubt, oder als Reaktand bei der Herstellung von kristallinem Silicium oder kristallinen Siliciumverbindungen, hochreine Schleifmittel, hochreine Hitzekacheln oder als Material von Artikeln. Ebenfalls Gegenstand der Erfindung ist die Verwendung der Metallverbindungspulver zur Herstellung von LEDs, Halbleitermaterialien, Flat Panel Displays und zur Herstellung von Materialien für die Thermoelektrik oder zur Herstellung von Einkristallen, Schleifmitteln, Isolatoren, als Feuerfeststoff, wie als Hitzekachel, oder bei der Herstellung von Artikeln oder bei der Herstellung von Elektroden und/oder Schmuck. Verwendung zur Herstellung von Halbleiterausgangsstoffen, Halbleitern, Thermoelementen zur Energierückgewinnung aus Abwärme, insbesondere von hochtemperaturstabilen Thermoelementen sowie zur Herstellung von Hochtemperatursperrschichten und UV/Vistransparenten und hochtemperaturstabilen Bauteilen verwendet werden.

Gegenstand der Erfindung ist ebenfalls die Verwendung von amorphen Metallverbindungspulvern umfassend amorphes SiC zur Herstellung einer Deckschicht für Fotoleiter oder bei der Herstellung von Deckschichten für Fotoleiter. Ferner ist Gegenstand der Erfindung die Verwendung von amorphem Metallverbindungspulvern, wie amorphem SiC zur Herstellung von Fensterschichten für Solarzellen. Gleichfalls Gegenstand der Erfindung ist die Verwendung von amorphen SiN-Verbindungen, wie vorzugsweise $Si_3N_4$/Si, insbesondere mit Brechungsindices von 2,1 bis 2,5 im Wellenlängenbereich von 400 bis 800 nm, zur Herstellung von Antireflexionsschichten und/oder als Füllstoffe zur Einstellung des Brechungsindexes von Kompositen. Die Herstellung vom Kompositen ist dem Fachmann hinlänglich bekannt, so umfassen Komposite in der Regel polymerisierte Monomere und Polymere, wie nicht funktionalisierte und/oder funktionalisierte (Meth)arcylate, und bspw. PMMA oder Polyacrylat etc.

Die Partikelgrößenbestimmung der Metallverbindungspulver als auch die Bildung von Agglomeraten oder das Vorliegen von Primärpartikeln kann analytisch mit nachfolgenden Methoden bestimmt werden. Die Bestimmung der Teilchengröße kann u.a. mittels Siebanalyse, TEM (Transelektronenmikroskopie), REM (Rasterkraftelektronenmikroskopie) oder Lichtmikroskopie erfolgen.

Bevorzugt liegt die Leitfähigkeit der Verfahrensprodukte, insbesondere der hochdicht verpreßten pulvrigen Verfahrensprodukte, gemessen zwischen zwei spitzen Elektroden unter $\kappa[m/\Omega.m^2]=1\cdot10^{-1}$. Angestrebt wird für das jeweilige Metallverbindungspulver eine geringe Leitfähigkeit, die direkt mit der Reinheit des Verfahrensproduktes korreliert.

Die nachfolgend erläuterten Figuren und Ausführungsbeispiele erläutern exemplarisch die Gegenstände der Erfindung ohne diese auf diese konkreten Beispiele zu beschränken.

## Ausführungsbeispiele

Die nachfolgenden Figuren zeigen:

| | |
|---|---|
| **Figur 1a:** | einen Freiraum Reaktor mit Abschirmrohr 4; |
| **Figur 1b:** | TEM-Aufnahme: SiC/0,8/0,6, Probenpräparation: Isopropanol/Wasser dispergiert aufgetragen (600000 : 1, Auflösung: 20 nm); |
| **Figur 1c:** | TEM-Aufnahme Primärpartikelgrößen von 7,3 nm, bis 15,3 nm, viele der Partikel weisen eine |

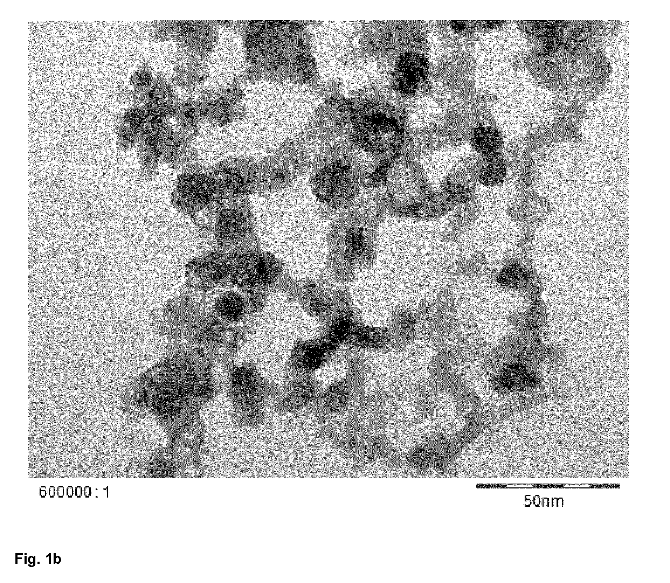

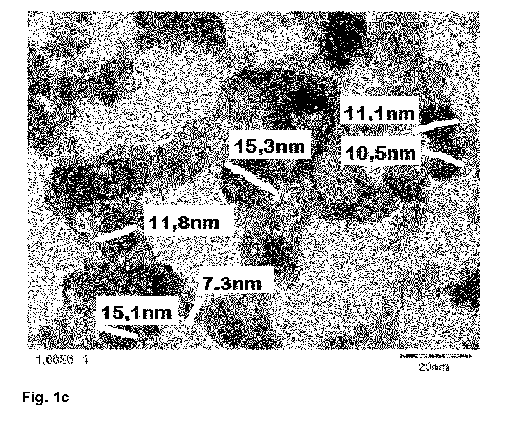

Partikelgröße von 10,5 bis 12,00 nm auf ($1,00 \cdot 10^6$: 1, Referenz: 20 nm); **Figur 1c:** zeigt einen vergrößerten Ausschnitt der **Figur 1b;**

**Figur 2:** Heraeus Ofen ROF 4/50 mit Mikrokanal-Lanze und schraubenförmiger Wandströmung von inerter Verdünnungsgase;

**Figur 3:** Mikrostruktur-Diffusor-Reaktor (FSR) mit verbessertem Wärmeübergang;

**Figur 4:** SiC aus Tetraethoxysilan (TEOS) Vergrösserung: 100000 : 1, Auflösung: 220 nm);

**Figur 5:** Mikrostruktur-Diffusor-Reaktor (FSR) mit kurzer Verweilzeit sowie verbessertem Wärmeübergang;

**Figuren 6a und 6b:** Alternativer Freiraum-Reaktor.

**Figur 7:** XRPD; y-Achse (Counts/Anzahl); x-Achse ° 2θ (Theta) von amorphem $Si_3N_4$ mit breiten Peaks im Bereich um 27, 39 und 68 ° 2θ (Theta).

**Figur 8:** UV/Vis-Spektrum y-Achse Probe ••• SiN211, --- SiN 212: Nullprobe (1-T (%)); x-Achse: Wellenlänge (nm)

**Figur 9a/b:** mittlere Breite +/- Standartabweichung (Balken); x-Achse: Anzahl (%), y-Achse: Größe (nm); Ausführungsbeispiel 4, **Figur 9a** Probe SiC635; **Figur 9b:** Probe SiC637.

**Figur 10:** Absorptionsverhalten (Absorption in relativen Einheiten) in Abhängigkeit von der Wellenlänge in nm von ▲ $Si_3N_4$, ● $Si_3N_4$/Si

**Figur 11:** Röntgenpulverdiffraktogramm amorpher $Si_3N_4$/Si Metallverbindungspulver mit unterschiedlichem Gehalt an metallischem Silicium im Kern und $Si_3N_4$ Hülle.

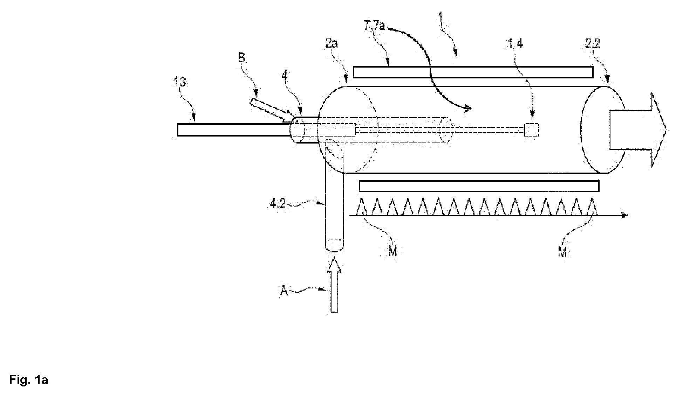

**Figur 1a** stellt einen Freiraum-Reaktor **1** (FSR) mit tangentialer Wandströmung dar, der eine Anordnung zur Temperatur-Messung im Ofen umfasst. Die Geometrie eines bevorzugten Ofens ist nachfolgend wiedergegeben. Das Reaktorrohr **2a** hat einen Aussendurchmesser von 36,1 mm und einen Innendurchmesser von 33,1 mm. Die Heizzone **7a** weist eine Länge von 700 mm auf. Die Reaktortemperatur kann beispielsweise T = 1300 °C betragen. Ferner umfasst der Reaktor ein Abschirmrohr **4** für eine Lanze (Aussendurchmesser: 6,7 mm, Innendurchmesser: 3,7 mm). Die Temperatur-Messlanze **13** weist einen Messfühler auf. Für Temperaturen bis 2000°C ist ein Temperaturmessfühler **14** für Hochtemperaturmessung vorgesehen. Der Reaktor-Rohr-Ausgang ist als **2.2** dargestellt und die tangentiale Zuführung für Zirkulargasströmung im Reaktor ist mit dem Bezugszeichen **4.2** bezeichnet. Die Buchstaben A und B bezeichnen die Prozessgase: **A:** Prozessgas A und **B:** Prozessgas B.

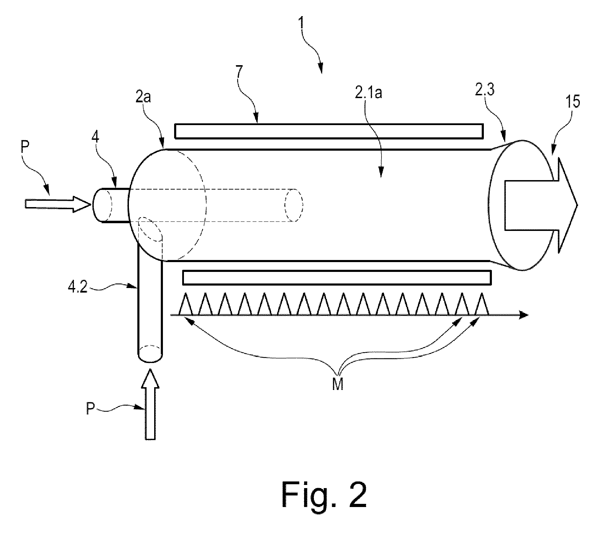

In **Figur 2** ist ein Heraeus Ofen ROF 4/50 mit Mikrokanal-Lanze und schraubenförmiger Wandströmung von inerten Verdünnungsgasen dargestellt. Der Reaktor ist sehr gut zur Herstellung von amorphen Metallverbindungspulvern geeignet, insbesondere für die Oberflächenabscheidung von Legier-/Dotierelementen z.B. Bor. Die Ofen Geometriedaten sind nachfolgend zusammengestellt **(2a:** Reaktor-Rohr: Aussendurchmesser: 36,1 mm; Innendurchmesser: 33,1 mm; 7: Heizzone Länge 700 mm; T = 1100 °C, **15:** Partikelabscheidung; **4:** Abschirm-Lanzenrohr (Aussendurchmesser: 6,7 mm, Innendurchmesser: 3,7 mm verschiebbar: 31 cm in Reaktionszonen). Die Reaktionszone ist als **2.1a** dargestellt und kann eine Temperatur von 1100°C aufweisen. Die Figur 2 zeigt zudem den Reaktor-Rohrausgang Reaktor-Rohrausgang **2.3** (mit Venturi-Trichter) mit Quenchzone sowie die tangentiale Zuführung **4.2** für Zirkulargasströmung im Reaktor **A:** Prozessgas A z.B. Monosilan, **B:** Prozessgas B z.B. Diboran.

**Figur 3** zeigt einen Mikrostruktur-Diffusor-Reaktor 1 (FSR) mit verbessertem Wärmeübergang: Anwendungsfeld zur Darstellung von amorphen SiC (Temp. typ. 1100°C) und amorphen SiN (typ. 1250°C): Die Reaktionsofen Geometrie ist nachfolgend zusammengefasst **(2a:** Reaktor-Rohr: Aussendurchmesser: 36,1 mm; Innendurchmesser: 33,1 mm, **7/7a:** Heizzone Länge 700 mm; T = 1250 °C, **15:** Partikelabscheidung, **4.3:** Prozessgaszuführung mit Gasmischeinheit). Ferner zeigt die **Figur 3** die Reaktionszone **2.1a,** die vorzugsweise eine Temperatur von 1250°C aufweisen kann. Zudem ist der Reaktor-Rohr-Ausgang **2.3** (mit Venturi-Trichter) mit der Quenchzone **4.2** dargestellt. Die Zuführung von Zusatzgas z.B. **AB** Wasserstoff/Ethan für Regelung der Zusammensetzung, Prozessgas/Wärmeübertrag/Partikelbildung im Reaktor ist möglich. Es stellen ferner dar: **16:** Reaktoreinsatz mit Milli-Kanälen, **AA:** Prozessgasmischung z.B. Monosilan-Ethan-Gemisch, **16.1:** Millikanal Ausschnitt.

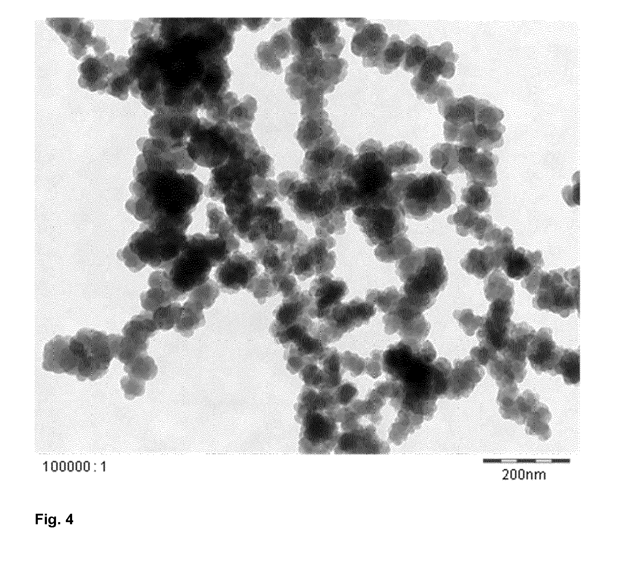

**Figur 4** zeigt eine TEM Aufnahme eines Siliciumcarbids (SiC), das aus Tetraethoxysilan (TEOS) hergestellt wurde.

**Figur 5** stellt einen Mikrostruktur-Diffusor-Reaktor **1** (FSR) mit kurzer Verweilzeit sowie verbessertem Wärmeübergang dar. Das Anwendungsfeld dieses Reaktors umfasst die Darstellung von amorphen nanoskaligem SiC für UV-Stop-Coatings (1300°C) vorzugsweise mit einem Kristallinitätsindex kleiner 20%, insbesondere kleiner 12%. Die Reaktionsofen Geometriedaten sind nachfolgend zusammengefasst **(2a:** Reaktor-Rohr: Aussendurchmesser: 36,1 mm; Innendurchmesser: 33,1 mm, 7: Heizzone Länge 700 mm; z.B. T = 1150 °C, **15:** Partikelabscheidung, **4.3:** Prozessgaszuführung mit Gasmischeinheit, **AAA** Vorgemischtes Prozessgas). Die Reaktionszone **2.1a** kann vorzugsweise bei etwa T = 1150°C betrieben werden. Ferner ist der Reaktor-Rohr-Ausgang **2.3** (mit Venturi-Trichter) mit Quenchzone dargestellt. Es stellen ferner dar: **4.2:** Zuführung Zusatzgas z.B. ABB Wasserstoff/Argon für Regelung Zusammensetzung Prozessgas/ Wärmeübertragung/Partikelbildung im Reaktor,

**16:** Reaktoreinsatz mit Milli-Kanälen z.B. SiC-Fritte, **AAA:** Prozessgasmischung z.B. Monosilan-Wasserstoff-Gemisch, **16.1:** Millikanal Ausschnitt.

Nachfolgend sind die **Figuren 6a** und **6b** zur Verwendung eines möglichen Freiraum-Reaktors näher erläutert, ohne die Erfindung auf diese Ausführungen zu beschränken.

**Figur 6a** zeigt einen Reaktor **1** (Freiraum/Free-Space Reaktor; FSR) mit Plasmagenerator **9** zur Zersetzung der reaktiven Gase im Plasma umfassend einen vertikalen Reaktionszylinder in dem in einer Zone oberhalb **3** in den Reaktionsraum **2.1** in dem Reaktionszylinder **2** mittels mindestens einer Düse **4.1** die Siliciumverbindung in die Gasphase überführt wird oder als gasförmige Siliciumverbindung optional als Gemisch umfassend das reaktive Gas und/oder das inerte Verdünnungsgas in den Reaktionsraum **2.1** eingebracht wird, optional erfolgt eine Legierung und/oder Beschichtung der Partikel. Die Reaktorwände können zusätzlich zur thermischen Zersetzung mit Heizvorrichtungen **7** versehen sein. Alternativ kann statt einer Heizvorrichtung gemäß **Figur 6b** ein Plasmagenerator **9** innen im Reaktionsraum **2.1** vorgesehen werden. Die Membran kann mit einer Neigung unterhalb des Reaktors vorgesehen sein, um die Metallverbindungspulver kontinuierlich aus dem Reaktor ausschleusen zu können und um die Verdünnungsgase oder nicht umgesetzten reaktiven Gase über die Membran aus dem Reaktor und von den Metallverbindungspulvern wirtschaftlich abzutrennen. Alternativ kann ein Schlauchfilter verwendet werden.

Die Beschichtung der Partikel kann im Bereich **2.2** des Reaktors erfolgen, in dem optional eine rotierende Scheibe **12,** zur Verteilung der Metallverbindungspulver angeordnet ist. Optional verfügt der Reaktorraum **2.2** über Düsen **11** zur Ausbringung reaktiver Gase. Der untere Bereich **2.2** des Reaktors kann zur Abkühlung der Metallverbindungen und/oder der Metallverbindungspulver dienen. Alternativ können die Düsen **11** zur Einbringung von inerten Verdünnungsgasen zur Abkühlung der Metallverbindungspulver verwendet werden. Im unteren Bereich des Reaktionszylinders **2.1** kann sich eine Vorrichtung **6** zum Auffangen der Partikel befinden. Die Gasdurchlässige Membran **10** dient der Abtrennung der Partikel vom inerten Verdünnungsgas. Alternativ können Düsen auch in der Reaktorwandung senkrecht zur Mittelachse des Reaktors angeordnet sein.

**Figur 6b** zeigt einen Reaktionsraum **2.1** eines Reaktionszylinders **2,** der einen Plasmagenerator **9** aufweist und alternativ vor einem nachgeschalteten Reaktionsraum **2.1** eines Reaktionszylinders **2** mit Heizvorrichtung **7** geschaltet werden kann. In dieser Fahrweise werden im Plasma die reaktiven Siliciumverbindungen ggf. in Gegenwart eines reaktiven Gases und/oder Verdünnungsgases zersetzt, während im Reaktionszylinder **2** mit Heizvorrichtung **7** das Wachstum der gebildeten Metallverbindungsteilchen gesteuert wird. Alternativ kann der Reaktionsraum **2.1** der **Figur 6b** auch einzeln betrieben werden um sehr kleinteilige Metallverbindungspulver zu generieren.

Die Plasmaentladung kann über verschiedenartige Wechselspannungen oder gepulste Spannungen von 1 bis $10^6$ V angeregt werden. Weiterhin kann der Kurvenverlauf, der für die Erzeugung der Entladung angelegten Spannung beispielsweise - aber nicht ausschließlich - rechteckig, trapezförmig, sinusförmig, dreieckförmig, gepulst oder stückweise aus einzelnen zeitlichen Verläufen zusammengesetzt sein. Weiterhin kann die Erzeugung geeigneter zeitlicher Kurvenverläufe durch Fourier-Synthese erfolgen.

Für eine hohe Elektronendichte und möglichst gleichzeitige Ausbildung der Entladung im gesamten Entladungsraum des Reaktors sind pulsförmige Anregungsspannungen besonders geeignet. Die Impulsdauer bei Pulsbetrieb richtet sich nach dem Gassystem und liegt bevorzugt von 10 ns bis 1 ms. Die Spannungsamplituden können 10 Vp bis 100 kVp, bevorzugt 100 Vp bis 10 kVp, besonders bevorzugt 500 Vp bis 5 kVp, in einem Mikrosystem betragen. Diese gepulsten Gleichspannungen können auch von hohen Wiederholraten, beispielsweise von 10 MHz im Fall der 10-ns-Impulse (Tastverhältnis 10 : 1) bis zu niedrigen Frequenzen hin (10 bis 0,01 Hz), gefahren und moduliert werden, beispielsweise als "Burstfunktionen", um die Reaktion von adsorbierten Spezies zu ermöglichen.

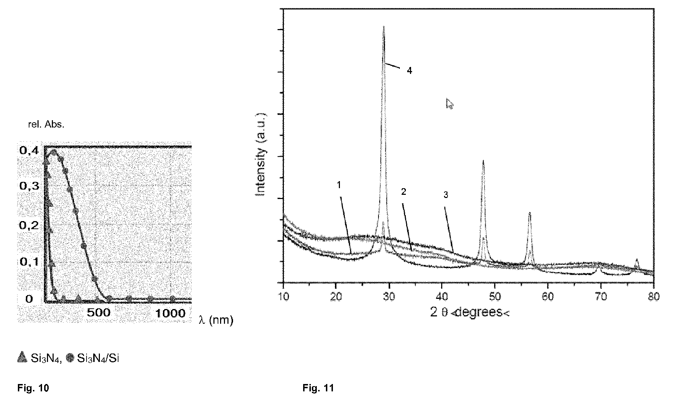

In **Figur 10** ist das Absorptionsverhalten (Absorption in relativen Einheiten) von ▲ $\underline{Si_3N_4}$, ●$\underline{Si_3N_4/Si}$ in Abhängigkeit von der Wellenlänge in nm dargestellt. Es wird deutlich, dass im Wellenlängenbereich von etwa 10 nm bis etwa 550 nm die Absorption von etwa größer gleich 0,01 auf größer gleich 0,05 bei 500 nm ansteigt und von 10 nm bis 500 nm in einem engen Bereich auf bis zu 0,4 ansteigt.

**Bezugszeichenliste:**

**1**      Reaktor (Free-Space Reaktor, FSR, Freiraum-Reaktor)
**2**      Reaktionszylinder (horizontal oder vertikal),
**2a**     horizontaler Reaktionszylinder
**2.1**    Reaktionsraum
**2.1a**   Reaktionszone, Reaktionszone (**2.1**a bis **2.1n**)
**2.2**    Reaktorzylinder-Ausgang, insbesondere Reaktorrohr-Ausgang
**2.3**    Reaktorzylinder-Ausgang (mit Venturi-Trichter) Quenchzone
**3**      Zone oberhalb (3) im Reaktionsraum (**2.1**)

| 4 | Abschirmung für Lanze |
| 4.1 | mindestens einer Düse |
| 4.2 | Zuführung tangential, insbesondere für Zirkulargasströmung im Reaktor |
| 4.3 | Prozessgaszuführung mit Gasmischeinheit |
| 5 | untere Bereich im Reaktor **2.1** |
| 6 | Vorrichtung |
| 7 | Heizvorrichtung; **7a:** Heizzone |
| 8 | Reaktorwand |
| 9 | Plasmagenerator |
| 10 | gasdurchlässige Membran |
| 11 | Düse(n) |
| 12 | rotierende Vorrichtung |
| 13 | Temperatur-Messlanze |
| 14 | Temperatur-Messfühler |
| 15 | Partikelabscheidung |
| 16 | Reaktoreinsatz mit Milli-Kanälen z.B. SiC-Fritte |
| 16.1 | Millikanal Ausschnitt |
| P | Prozessgas |
| M | Messpunkte im Reaktor |

**A** Prozessgas A; **B** Prozessgas B; **AB** Wasserstoff/Ethan für Regelung Zusammensetzung; Prozessgas / Wärmeübertrag/Partikelbildung im Reaktor; **AA:** Prozessgasmischung z.B. Monosilan-Ethan-Gemisch; **AAA** Vorgemischtes Prozessgas; **ABB** Wasserstoff/Argon für Regelung Zusammensetzung; Prozessgas / Wärmeübertrag/Partikelbildung im Reaktor; **AAA:** Prozessgasmischung z.B. Monosilan-Wasserstoff-Gemisch

Alle Angaben in Liter entsprechen Normliter. Der Plasmareaktor wurde bei 0,45 kW und ca. 14 kHz mit Hochspannungspulsen mit einer Halbwertsbreite von t(50) 567ns und einem Massestrom von 43 NL/min betrieben. Für die nachstehend genannten Plasma-Verfahren wurden im nichtthermischen Gleichgewicht betriebene Gasentladungen verwendet.

**Ausführungsbeispiele 1:** Gewinnung von Silicium-Nitrid in hochreiner Form in einem Freiraum Reaktor. Es wird Monosilan mit Ammoniak $NH_3$ zur Reaktion gebracht. Die Umsetzung erfolgt in einer Wasserstoff haltigen Inertgas-Matrix (60 Vol.-%). Der Wasserstoff wird als Wärmeüberträger und als Verdünnungsgas verwendet. Zusätzlich weist die Matrix einen Anteil von rund 1 Vol.-% an Argon und Xenon auf. Argon und Xenon begünstigen die Bildung sphärischer Partikel. Ammoniak wird im molaren Überschuss von etwa 1 : 15 zugegeben. Die Verweilzeit beträgt vorzugsweise 400 Millisekunden in einem Rohrreaktor mit einer Länge von 50 cm und einem Temperaturprofil in dem mindestens drei Messpunkte eine Temperatur von mindestens 1230 °C aufweisen. Die nachfolgende **Tabelle 1** zeigt das Temperaturprofil mit Abschirmlanze zur Herstellung von amorphem MeX.

**Tabelle 1:** Temperaturprofil Reaktor 1 (Fig.1a) - SiN-Herstellung:

| X-Wert im Ofen (mm); Messpunkte | Temperaturwert im Reaktor |
|---|---|
| 0 | 600 |
| 50 | 910 |
| 100 | 1080 |
| 150 | 1155 |
| 200 | 1209 |
| 250 | 1205 |
| 300 | 1237 |
| 350 | 1247 |
| 400 | 1253 |
| 450 | 1190 |
| 500 | 1099 |
| 550 | 945 |

(fortgesetzt)

| X-Wert im Ofen (mm); Messpunkte | Temperaturwert im Reaktor |
|---|---|
| 600 | 570 |

Gemäß der theoretischen Reaktionsgleichung $3\,SiH_4 + 4\,NH_3 \rightarrow Si_3N_4 + 12\,H_2$ wird das Zielprodukt Siliciumnitrid erhalten. Das Produkt wird über einen an das Reaktionsrohr angebrachten Konus einem Filter zugeführt, in welchem die Siliumnitridpartikel aufgehalten werden und isoliert werden können.

Das Probenmaterial wurde mit dem Elementanalysator TCH600 auf den Stickstoffgehalt analysiert. Der N-Gehalt in %[m/m] wurde zu 35,8 doppelbestimmt. Die Röntgenbeugungsanalyse im Bereich von 15° - 100° (2Theta) in Reflexion liefert ein

XRD-Diffraktogramm der gemessenen Probe einer amorphen Struktur; kristalline Bestandteile konnten nicht nachgewiesen werden.

Die Partikel haben je nach den konkreten Verfahrensbedingungen (a) Gasmischung und b) Verweilzeit in einem Reaktor gemäß **Figur 1,** unterschiedliche Primärpartikelgrößen. Die Absorption der Partikel mit einer Partikelgröße der Cluster von 100 bis 500 nm sowie einer Primärpartikelgröße von etwa 20 bis 25 nm Siliciumnitrid beträgt bei Einwaage von c=0.05g/l SiN im Bereich von 800 bis 2000 nm unter 5 % und steigt ab etwa 600 nm quasi linear an und erreicht bei 200 nm - also im UV eine Absorption von mehr als 20%. Die erhaltenden Siliciumnitrid Primärpartikel sind im Wesentlichen amorph. **Figur 7** zeigt das XRPD (y-Achse (Counts/Anzahl); x-Achse ° 2θ (Theta)) von amorphem $Si_3N_4$. Gemäß **Figur 7** sind keine Reflexe von kristallinen Anteilen von $Si_3N_4$ zu erkennen. Das XRPD des amorphen Siliciumnitrids zeigt breiten Peaks im Bereich um 27, 39 und 68 ° 2θ (Theta).

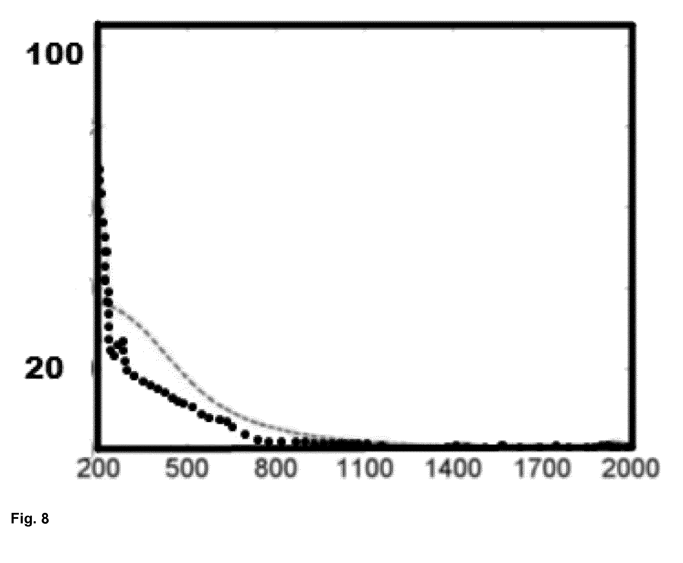

Im Vergleich zu $TiO_2$ weist das nanopartikuläre Siliciumnitrid der Probe ••• SiN211 deutlich günstigere Trans-missionseigenschaften als $TiO_2$ Partikel auf (--- SiN 212: Nullprobe). Folglich ist der UV-Schutz durch Siliciumnitrid deutlich effektiver als die eines $TiO_2$ basierten **(Figur 8).**

Entsprechend den Verfahrensbedingungen werden amorphe SiN-Primärpartikel in Form von Clustern Primär-partikel mit ($d_{50}$) 131 nm erhalten, bestimmt mittels dynamischer Lichtstreuung zur Bestimmung des hydrodynamischen Radius. Hierzu wurde (Probe SiN211) 0.01g/l in 2-Propanol, Stab-Ultraschall dispergiert und danach die Messung vorgenommen.

Entsprechend den Verfahrensbedingungen mit verdoppeltem Monosilangehalt werden amorphe SiN Cluster von Primärpartikeln mit ($d_{50}$) 201 nm erhalten, bestimmt mittels dynamischer Lichtstreuung zur Bestimmung des hydrodynamischen Radius. Hierzu wurde (Probe SiN212) 0.1g/l in 2-Propanol, Stab-Ultraschall dispergiert und danach die Messung vorgenommen.

Für das Ausführungsbeispiel 1 kann beispielhaft alternativ Monosilan mit Ammoniak $NH_3$ zur Reaktion gebracht. Die Umsetzung erfolgt in einer Argon-Stickstoff-$H_2$-Matrix (60 Vol.-%). Der Wasserstoff wird als Wärmeüberträger und als Verdünnungsgas verwendet. Ammoniak wird im molaren Überschuss von etwa 1 : 15 bezogen auf das Monosilan zugegeben. Die Verweilzeit beträgt von 10 bis 700 Millisekunden in einem Rohrreaktor **1** mit einer Länge von 50 cm und einer Temperatur von mindestens 1250 °C und einem Rohrreaktor **2** mit der fünffachen Länge des Reaktor 1 und einer Temperatur von mindestens 1200°C.

Für das Ausführungsbeispiel 1 kann beispielhaft alternativ eine Umsetzung mit den folgenden Reaktionsbedingungen erfolgen: Die Partikel haben je nach den konkreten Verfahrensbedingungen (a) Gasmischung 20 NL/Min Stickstoff ($N_2$), 2,5 Normliter pro Minute (NL/Min) Ammoniak ($NH_3$), 1,1 NL/Min Argon (Ar) mit 10 Gew.-% Monosilan ($SiH_4$) unterschiedliche Mikropartikelgrößen, wobei zur Herstellung dieser Probe die Verweilzeit 100 Millisekunden in einem Reaktor gemäß **Figur 1** betrug. Entsprechend den Verfahrensbedingungen werden amorphe Submicropartikel mit ($d_{50}$) 31 bis 38 nm erhalten.

**Ausführungsbeispiel 2:** Gewinnung von Silicium-Carbid in hochreiner Form in einem Freiraum Reaktor. Es wird Tetraethoxysilan (TEOS) mit $CH_4$ zur Reaktion gebracht. TEOS und die Kohlenstoffquelle werden in einem molaren Verhältnis etwa 0,8 Si, bspw. als TEOS zu 0,6 C bspw. Methan eingesetzt und auf Normliter/Minute umgerechnet. Gemäß der allgemeinen Reaktionsgleichung

$$Si(OCH_2CH_3)_4 + CH_4 \rightarrow SiC + Nebenprodukte$$

wird Siliciumcarbid erhalten.

Das Produkt wird über einen an das Reaktionsrohr angebrachten Konus einem Filter zugeführt, in welchem die Siliumcarbidpartikel aufgehalten werden und isoliert werden können. Erhalten wird amorphes SiC Niederdruck(beta).

SiC unterschiedlicher Reinheit wurde bei ca. 1100 °C, Verweilzeit 60 Millisekunden, in $H_2$-Atmospäre hergestellt. Erhalten wurde amorphes SiC. Die **Figur 1b** zeigt eine TEM-Aufnahme: von SiC/0,8/0,6 (Probenpräparation: Isopropanol/Wasser dispergiert aufgetragen) und

**Figur 1c:** zeigt eine TEM-Aufnahme mit Primärpartikelgrößen von 4,3 nm bis 15,3 nm, wobei viele der Partikel eine Partikelgröße von 8,5 bis 12,00 nm aufweisen. Die mittlere Partikelgröße ist $d_{50}$ = 9 nm.

Die mittels TEM analysierten SiC Partikel sind sphärisch bzw. kugelig, amorph: Ihre Partikelgröße ist vorzugsweise kleiner gleich 20 nm, bevorzugt kleiner gleich 15 nm, besonders bevorzugt kleiner gleich 10 nm.

**Ausführungsbeispiel 3:** Gewinnung von Silicium-Carbid in hochreiner Form in einem Freiraum Reaktor. Es wird Monosilan mit Ethen zur Reaktion gebracht. Gemäß der theoretischen Reaktionsgleichung

$$1\ SiH_4 + 1\ C_2H_4 \rightarrow SiC + 4\ H_2$$

wird das Zielprodukt Siliciumcarbid erhalten. Das Produkt wird über einen an das Reaktionsrohr angebrachten Konus einem Filter zugeführt, in welchem die Siliumcarbidpartikel aufgehalten werden und isoliert werden können. Es wurde amorphes SiC unterschiedlicher Reinheit bei ca. 1100 °C in $H_2$-Atmospäre hergestellt.

Für die unter Ausführungsbeispiel 3 hergestellten Proben wurde Monosilan mit Ethylen ($C_2H_4$) zur Reaktion gebracht. Die Umsetzung erfolgt in einer Argon-Wasserstoff-Matrix (90 Vol.-%). Der Wasserstoff wird als Wärmeüberträger und als Verdünnungsgas verwendet. Ethylen wird äquimolar bezogen auf das Monosilan zugegeben. Die Verweilzeit beträgt bis 700 Millisekunden in einem Rohrreaktor **1** mit einer Länge von 50 cm und einer Temperatur von mindestens 1100°C und einem Rohrreaktor **2** mit der fünffachen Länge des Reaktor 1 und einer Temperatur von mindestens 1100 °C.

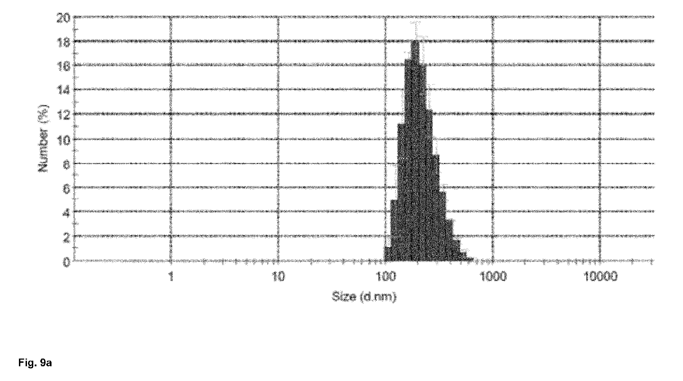

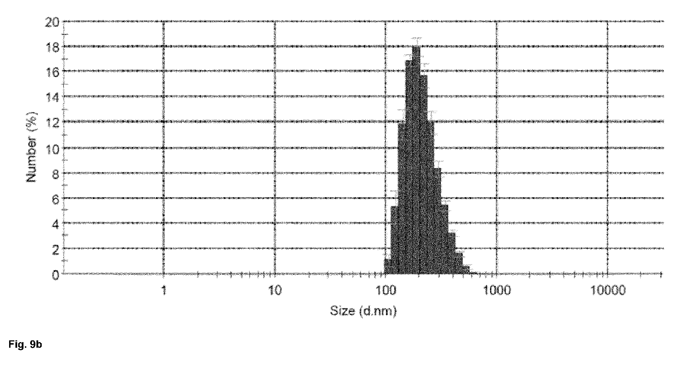

Die Partikel haben je nach den konkreten Verfahrensbedingungen unterschiedliche Clustergrößen. So können mit den nachfolgenden Prozessgasmischungen folgende Partikel hergestellt werden: 35 NL/Min Wasserstoff ($H_2$), 2,5 Normliter pro Minute (NL/Min) Ethylen ($C_2H_4$), 5 NL/Min Monosilan ($SiH_4$) zur Herstellung der Probe SiC213 und einer Verweilzeit von bspw. 50 Millisekunden, zur Herstellung der Proben SiC635, SiC636, SiC637 und SiC891 50 + 200 Millisekunden (=250 ms) in einem Reaktor gemäß **Figur 1,** die unterschiedliche Clustergrößen aufweisen. Entsprechend den Verfahrensbedingungen werden amorphe SiC/Si Submicropartikel mit ($d_{50}$) = 221 nm erhalten, bestimmt mittels dynamischer Lichtstreuung zur Bestimmung des hydrodynamischen Radius. Für Probe SiC213, wurden 0,1g/l in 2-Propanol mit Ultraschall dispergiert. **Figur 9a** zeigt die Probe SiC635 ($d_{50}$ = 200nm); **Figur 9b** SiC637 ($d_{50}$ = 180 nm).

Die erfindungsgemäßen amorphen Metallverbindungspulver umfassend SiC eignen sich besonders bevorzugt als Deckschicht für Fotoleiter oder als Fensterschicht für Solarzellen.

**Ausführungsbeispiel 4:**

Die unten genannten Partikel wurden im Heisswandreaktor bei Wandtemperaturen hergestellt: a) XRD Nr. 4 in Fig. 11: bei 1000°C, b) XRD Nr. 1: bei 1100°C, c) XRD Nr. 2: bei 1200°C, d) XRD Nr. 3: bei 1300°C hergestellt. Als Prozessgase wurden im Heisswandreaktor im a) Nr. 4 (kristallin): 2 Normliter $SiH_4$ und 0,6 Normliter Ammoniak , b) Nr. 1: 2 Normliter $SiH_4$ und 2 Normliter Ammoniak, c) Nr. 2: 1,1 Normliter $SiH_4$ und 2,5 Normliter Ammoniak, d) Nr. 3: 0,6 Normliter $SiH_4$ und 2,5 Normliter Ammoniak hergestellt. Der Stickstoffgehalt wurde bei a) Nr. 4 auf 7.2 Gew.-%, b) Nr. 1: 47.5 Gew.-%, c) Nr. 2: 56.5 Gew.-% sowie bei c) Nr. 3: auf 58 Gew-% bestimmt.

Abbildung XRD von erfinderischem Nano-$Si_3N_4$/Si gemäß **Figur 11.**

    a) XRP Nr. 4: $Si_3N_4$/Si 90% Si-Anteil, kristallin,
    b) XRD Nr. 1: amorphes $Si_3N_4$/Si 14 Gew.-% metallisches Si-Anteil, Brechzahl auf 2,3 bestimmt,
    c) XRD Nr. 2: amorphes $Si_3N_4$/Si, kleiner 4 Gew.-% metallisches Si-Anteil Brechzahl ca. 2,1,
    d) XRD Nr. 3:: amorphes $Si_3N_4$/Si, Si-Anteil kleiner metallisches Gew.-1%, Brechzahl rund 2.

Mit dem erfindungsgemäßen SiN-Verbindungen können Kompositen umfassend organische Polymere sowie SiN-Verbindungen als Füllstoffe, wie die amorphen $Si_3N_4$/Si mit Primärpartikeln bspw. im Bereich 35 nm, hergestellt werden. Die amorphen $Si_3N_4$/Si können zur Einstellung der Brechzahl den bekannten Polymeren wie PMMA, Polycarbonat etc. zugesetzt werden.

Das amorphe Siliziumangereicherte $Si_3N_4$ - kurz $Si_3N_4$/Si genannt zeigt nun überraschend einen Brechungsindex im sichtbaren Wellenlängenbereich (400-800 nm) von rund 2,4. Es wird vermutet, dass es sich um sogenannte Core-Shell-Partikel handelt, bei denen der Kern aus einer Siliziumphase besteht, die Hülle bzw. Schale aus $Si_3N_4$.

**Patentansprüche**

**1.** Metallverbindungspulver MeX, wobei Me Silicium ist und X ausgewählt ist aus Stickstoff, Kohlenstoff und Germanium, **dadurch gekennzeichnet,**

**dass** die Metallverbindungspulver Primärpartikel mit einer Partikelgröße von 1 nm bis 100 nm aufweisen und die Partikel im Wesentlichen amorph sind, wobei das Metallverbindungspulver eine Kristallinität kleiner 20% bis größer gleich 0,1 % aufweist.

2. Metallverbindungspulver nach Anspruch 1, **dadurch gekennzeichnet, dass** das Metallverbindungspulver als $Si_3N_4$/Si mit einem Brechungsindex von etwa 2,1 bis 2,5 im Wellenlängenbereich von 400 bis 800 nm vorliegt, insbesondere $Si_3N_4$/Si mit einem Gehalt an metallischem Silicium von 2 Gew.-% bis 95 Gew.-%

3. Metallverbindungspulver nach Anspruch 1 oder 2, **dadurch gekennzeichnet, dass** das Metallverbindungspulver

a) MeX Primärpartikel mit einer Legierung mit größer gleich $10^{21}$ Atomen/cm$^3$ bis kleiner gleich $0,5 \cdot 10^{22}$ ausgewählt aus mindestens einem Elektronendonator und Elektronenakzeptor umfasst, oder
b) MeX Primärpartikel mit einer Siliciumlegierung mit größer gleich $10^{21}$ Atomen/cm$^3$ bis kleiner gleich $0,6 \cdot 10^{22}$ ausgewählt aus mindestens einem Elektronendonator und Elektronenakzeptor umfasst.

4. Metallverbindungspulver nach einem der Ansprüche 1 bis 3, **dadurch gekennzeichnet, dass** das Metallverbindungspulver Primärpartikel und optional Cluster der Primärpartikel aufweist,

a) die jeweils unabhängig aus einer MeX- oder Siliciumlegierung mit mindestens einem Elektronendonator oder mindestens einem Elektronenakzeptor mindestens teilweise bestehen und/oder
b) jeweils unabhängig mindestens eine intrinsische Zone einer MeX- oder Siliciumlegierung umfassend einen Elektronendonator, Elektronenakzeptor, eine einen Elektronendonator oder Elektronenakzeptor enthaltenden Verbindung aufweisen, und/oder
c) jeweils unabhängig mindestens eine Zone einer MeX- oder Siliciumlegierung umfassend einen Elektronendonator, Elektronenakzeptor, eine einen Elektronendonator oder Elektronenakzeptor enthaltenden Verbindung als mindestens teilweise Beschichtung aufweisen.

5. Metallverbindungspulver nach einem der Ansprüche 1 bis 4, **dadurch gekennzeichnet, dass** die Metallverbindungspulver umfassend Primärpartikel und optional Cluster eine MeX-Legierung oder Siliciumlegierung mit einem Element der Gruppe 13 oder 15 des Periodensystems der Elemente (PSE) nach IUPAC aufweisen und/oder zumindest eine Zone einer MeX-Siliciumlegierung mit einem Element der 13 oder 15 Gruppe aufweisen.

6. Metallverbindungspulver nach einem der Ansprüche 1 bis 5, **dadurch gekennzeichnet, dass**

a) die MeX Primärpartikel mindestens eine intrinsische Zone einer Siliciumborlegierung umfassen, und/oder
b) die MeX Primärpartikel mindestens eine Zone einer Siliciumborlegierung als eine zumindest teilweise Beschichtung der Primärpartikel umfassen, insbesondere liegt die Zone als eine zumindest teilweise Beschichtung der Primärpartikel vor, wobei das Metallverbindungspulver thermoelektrische Eigenschaften aufweist.

7. Metallverbindungspulver nach einem der Ansprüche 1 bis 6, **dadurch gekennzeichnet, dass** das Metallverbindungspulver Primärpartikel und optional Cluster der Primärpartikel umfasst, enthaltend Siliciumcarbid, Siliciumnitrid, Silicium-Germanium sowie entsprechend mit einem Elektronenakzeptor oder Elektronendonator legierte Metallverbindungspulver.

8. Verfahren zur Herstellung von Metallverbindungspulvern nach einem der Ansprüche 1 bis 7, indem

a) mindestens eine bei erhöhter Temperatur gasförmige Siliciumverbindung,
b) optional in Gegenwart mindestens eines bei erhöhter Temperatur reaktiven Gases oder einer Mischung von reaktiven Gasen, in Gegenwart eines Verdünnungsgases in einer im Wesentlichen sauerstofffreien Atmosphäre unter (i) thermischen Bedingungen und/oder (ii) im Plasma zersetzt wird, und
in Form eines Metallverbindungspulvers MeX, wobei Me Silicium ist und X ausgewählt ist aus Stickstoff, Kohlenstoff und Germanium als Primärpartikel, deren Partikelgröße von 1 nm bis 100 nm liegt, erhalten wird, und optional als Cluster umfassend Primärpartikel erhalten wird, wobei die Partikel im Wesentlichen amorph sind.

9. Verfahren nach Anspruch 8, **dadurch gekennzeichnet, dass** die bei erhöhter Temperatur gasförmige Siliciumverbindung umfasst Wasserstoff- und/oder Halogen-enthaltende Silane und/oder Kohlenwasserstoff-enthaltende Silane, wie Halogensilane, Chlorsilane, wie Dichlorsilan, Trichlorsilan, Tetrachlorsilan, Hexachlordisilan, Methyltrichlorsilan, Polyhalogensilane sowie reine H-Silane wie Monosilan, Wasserstoff enthaltende Polysilane oder Polyhalogensilane, mindestens ein Alkoxysilan oder Gemische enthaltend mindestens zwei der genannten Verbindungen.

10. Verfahren nach Anspruch 8 oder 9, **dadurch gekennzeichnet, dass**

> a) eine gasförmige Siliciumverbindung und optional
> b) mindestens ein reaktives Gas unter (i) thermischen Bedingungen bei einer Temperatur von 600 bis 1500 °C zersetzt werden.

11. Verfahren nach einem der Ansprüche 8 bis 10, **dadurch gekennzeichnet, dass** das Verdünnungsgas Argon, Helium, Xenon, Krypton, Wasserstoff oder ein Gemisch mindestens zwei der genannten Gase umfasst.

12. Verfahren nach einem der Ansprüche 8 bis 11, **dadurch gekennzeichnet, dass** das mindestens eine reaktive Gas umfasst

> a) Stickstoff enthaltende Verbindungen, wie Stickstoff, $NH_3$, Alkylamine, Germanium enthaltende Verbindungen, Kohlenwasserstoffe, wie Methan, Butan und/oder Propan und optional umfasst das mindestens eine reaktive Gas
> b) Legierungsgase umfassend Verbindungen der Elemente der Gruppe 13 oder 15, des Periodensystems der Elemente nach IUPAC, bevorzugt Bor, Aluminium, Phosphor, Arsen und/oder Antimon.

13. Reaktor (Freiraum Reaktors) (1) zur Herstellung von Metallverbindungspulvern MeX nach einem der Ansprüche 1 bis 7 oder einem Verfahren der Ansprüche 8 bis 12, wobei Me Silicium ist und X ausgewählt ist aus Silicium, Stickstoff, Kohlenstoff und Germanium mit Partikeln deren Primärpartikelgröße 1 nm bis 100 nm beträgt, wobei der Reaktor (1) einen Reaktionszylinder (2) mit Reaktionsraum (2.1) umfasst und im Bereich des Reaktoranfangs (2.a, 3) mindestens zwei Zuführungen (4.1, 4.2, 4.3) aufweist für die Einleitung

> a) der mindestens einen bei erhöhter Temperatur gasförmigen Siliciumverbindung, und
> b) optional des mindestens eines reaktiven Gases und/oder Verdünnungsgases, in den Reaktionsraum (2.1), wobei dem Reaktionsraum (2.1) zumindest in einem Bereich am äußeren Umfang des Reaktionsraumes (2.1) Heizvorrichtungen (7) zugeordnet sind, und/oder dem Reaktionsraum (2.1) mindestens ein Plasmagenerator (9) zugeordnet ist, zur Erzeugung eines Plasmas im Reaktionsraum (2.1), und wobei dem Reaktor (1) mindestens zwei Zuführungen (4, 4.1, 4.2, 4.3) im Bereich des Reaktoranfangs (2.a, 3) zugeordnet sind, wobei die Zuführungen in einem Winkel von größer gleich 30° bis 90° zueinander angeordnet sind.

14. Metallverbindungspulver erhältlich nach einem Verfahren nach einem der Ansprüche 8 bis 12.wobei wobei das Metallverbindungspulver eine Kristallinität kleiner 20% bis größer gleich 0,1% aufweist.

15. Verwendung der Metallverbindungspulver nach einem der Ansprüche 1 bis 7 oder erhältlich nach einem Verfahren nach einem der Ansprüche 8 bis 12, zur Herstellung von Thermoelementen, Halbleitern, Halbleitermaterialien, Pasten, Cremes, Kosmetikprodukten, pharmazeutischen Produkten, Silicium enthaltenden Pasten, Elektroden, Membranen, Katalysatoren, von LEDs, Displays, transparenter Schichten, Flat Panel Displays, Schmelztiegeln, Tiegeln, als Ausgangsverbindung zur Kristallisation hochreiner metallischer Silicium-Verbindungen, Beschichtungen, Aerosolen, Materialien für die Thermoelektrik, als Ausgangsverbindung zur Herstellung hochreiner polykristalliner Metallverbindungen oder von Einkristallen der Metallverbindungen, in Hochtemperatur Transistoren, die bei 100 bis 400 °C, vorzugsweise um 300 °C betrieben werden können, zur Herstellung von Hochtemperatursperrschichten, die bei 300 bis 400 °C betrieben werden können, zur Herstellung von Hochtemperaturmembranen, die bei 300 bis 400 °C betrieben werden können, zur Herstellung von Hochtemperaturbauteilen in Batterien, die bei 300 bis 400 °C betrieben werden können, zur Herstellung von Bauteilen, deren Absorption bei 300 bis 1000 nm sich im Wesentlichen linear ändert, insbesondere von Bauteilen, deren Transmission bei etwa 1000 nm 50 % beträgt und bis 450 nm oder bis etwa 300 nm 20 % beträgt und ab 300 nm im Wesentlichen keine Transmission mehr erlaubt, oder als Reaktand bei der Herstellung von kristallinem Silicium oder kristallinen Siliciumverbindungen, hochreine Schleifmittel, hochreine Hitzekacheln oder als Material von Artikeln, amorphes SiC zur Herstellung einer Deckschicht für Fotoleiter, amorphes SiC zur Herstellung von Fensterschichten für Solarzellen, amorphe SiN-Verbindungen, wie vorzugsweise $Si_3N_4$/Si, insbesondere mit Brechungsindices von 2,1 bis 2,5 im Wellenlängenbereich von 400 bis 800 nm, zur Herstellung von Antireflexionsschichten und/oder als Füllstoffe zur Einstellung des Brechungsindexes von Kompositen, bps. enthaltend PMMA.

**Fig. 1a**

600000 : 1

50nm

**Fig. 1b**

**Fig. 1c**

Fig. 2

Fig. 3

100000 : 1

200nm

**Fig. 4**

Fig. 5

**Fig. 6a**

**Fig. 6b**

Fig. 7

Fig. 8

**Fig. 9a**

Fig. 9b

rel. Abs.

A Si₃N₄, ● Si₃N₄/Si

**Fig. 10**

**Fig. 11**

**Europäisches Patentamt**
**European Patent Office**
**Office européen des brevets**

# EUROPÄISCHER RECHERCHENBERICHT

Nummer der Anmeldung

EP 15 19 6628

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KIJIMA K ET AL: "SINTERING OF ULTRAFINE SIC POWDERS PREPARED BY PLASMA CVD", JOURNAL OF MATERIALS SCIENCE, KLUWER ACADEMIC PUBLISHERS, DORDRECHT, Bd. 24, Nr. 8, 1. August 1989 (1989-08-01), Seiten 2929-2933, XP000050266, ISSN: 0022-2461 * 2. Experimental procedure; Seite 2929 - Seite 2930; Abbildung 2 * | 1,3-15 | INV. C01B21/068 C01B31/36 |
| X | HYUK-SANG PARK: "THERMAL PLASMA CHEMICAL VAPOUR DEPOSITION FOR SIC POWDERS FROM SICH3CI3-H2", JOURNAL OF MATERIALS SCIENCE, KLUWER ACADEMIC PUBLISHERS, DORDRECHT, Bd. 26, Nr. 21, 1. November 1991 (1991-11-01), Seiten 5957-5964, XP000249055, ISSN: 0022-2461, DOI: 10.1007/BF01130141 * das ganze Dokument * | 1,3-15 | |
| X | EP 0 365 295 A1 (UNION CARBIDE CORP [US]) 25. April 1990 (1990-04-25) * das ganze Dokument * | 1-15 | RECHERCHIERTE SACHGEBIETE (IPC) C01B |
| X | YONG LIANG ET AL: "Laser synthesis of nano powders of Si-based nitrides and carbides", PROCEEDINGS OF SPIE, Bd. 3550, 15. August 1998 (1998-08-15), Seiten 35-42, XP055192361, ISSN: 0277-786X, DOI: 10.1117/12.317900 * 1. Introduction 2. Experimental 5. Conclusions; Abbildung 6 * | 1-15 | |

-/--

Der vorliegende Recherchenbericht wurde für alle Patentansprüche erstellt

| Recherchenort | Abschlußdatum der Recherche | Prüfer |
|---|---|---|
| Den Haag | 24. März 2016 | Gumann, Sina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 15 19 6628

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VIVET F ET AL: "Synthesis and characterization of SiC:H ultrafine powder generated in an argon-silane-methane low-pressure radio-frequency discharge", JOURNAL OF APPLIED PHYSICS, AMERICAN INSTITUTE OF PHYSICS, US, Bd. 83, Nr. 12, 15. Juni 1998 (1998-06-15) , Seiten 7474-7481, XP012044385, ISSN: 0021-8979, DOI: 10.1063/1.367510 * das ganze Dokument * ----- | 1-15 | |
| X | KEIL D G ET AL: "Combustion synthesis of nanosized SiCxNy powders", MATERIALS RESEARCH SOCIETY SYMPOSIUM PROCEEDINGS (MRS), MATERIALS RESEARCH SOCIETY, PITTSBURG, PA; US, Bd. 410, 1. Januar 1996 (1996-01-01), Seiten 161-166, XP009172433, ISSN: 0272-9172 * das ganze Dokument * ----- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 24. März 2016 | Gumann, Sina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 19 6628

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-03-2016

| Im Recherchenbericht angeführtes Patentdokument | Datum der Veröffentlichung | Mitglied(er) der Patentfamilie | Datum der Veröffentlichung |
|---|---|---|---|
| EP 0365295 A1 | 25-04-1990 | CA 2000949 A1 | 19-04-1990 |
| | | EP 0365295 A1 | 25-04-1990 |
| | | JP H02188412 A | 24-07-1990 |
| | | US 4929432 A | 29-05-1990 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040231583 A

- US 4619905 A

**In der Beschreibung aufgeführte Nicht-Patentliteratur**

- **J.A. LELY.** *Darstellung von Einkristallen von Siliciumcarbid und Beherrschung von Art und Menge der eingebauten Verunreinigungen,* August 1955, 229-231

- **YONG LIANG ; ZHENGANG WU ; FEN ZHENG ; QUANGGANG XIAN ; ZHONGCHAO FENG.** Laser synthesis of nano powders of Si-based nitrides and carbides. *Proc. SPIE 3550, Laser Processing of Ma- terials and Industrial Applications,* 15. August 1998, vol. II, 35
- Plasmatechnik: Grundlagen und Anwendungen - Eine Einführung; Autorenkollektiv. Carl Hanser Ver- lag, 1984